# EUROPEAN PATENT APPLICATION

(11) **EP 4 790 960 A1**
(43) Date of publication of application: **12.08.2026**
(21) Application number: 23954876.1
(22) Date of filing: 06.10.2023
(51) Int. Cl.: H04L 45/24, H04L 41/50, H04L 45/125, G06F 9/455, H04L 45/76, H04L 12/40

(54) **SIGNAL PROCESSING DEVICE AND VEHICLE COMMUNICATION DEVICE INCLUDING SAME**

(71) Applicant: LG Electronics Inc., Yeongdeungpo-gu Seoul 07336 (KR)
(72) Inventor: KIM, Ieesak, Seoul 06772 (KR); HONG, Hyuntaek, Seoul 06772 (KR); LEE, Sanghun, Seoul 06772 (KR)
(74) Representative: Vossius & Partner Patentanwälte Rechtsanwälte mbB
(86) International application number: PCT/KR2023/015444
(87) International publication number: WO 2025/075228

(57) **Abstract**

A signal processing device and a vehicle communication device including the same according to an embodiment of the present disclosure comprise: a network controller configured to control multipath routing for at least one of a plurality of zonal signal processing devices; and a network switch configured to perform network switching, wherein the network controller is configured to migrate a first service executed in a first zonal signal processing device among the plurality of zonal signal processing devices, and to execute a second service corresponding to the first service in a second zonal signal processing device. Accordingly, services can be efficiently executed or managed.

## Description

### BACKGROUND

### 1. Technical Field

The present disclosure relates to a signal processing device and a vehicle communication device including the same, and more particularly to a signal processing device capable of efficiently executing or managing services, and a vehicle communication device including the signal processing device.

### 2. Description of the Related Art

A vehicle is a machine that allows a user to move in a desired direction. A typical example of the vehicle is an automobile
Meanwhile, a signal processing device for vehicles is mounted in a vehicle for convenience of users using the vehicle.

A signal processing device for a vehicle can execute various services based on various sensor data from a sensor device or camera data from a camera.

Meanwhile, during execution of various services or applications in the signal processing device, the execution is constrained by in-vehicle hardware limitations and the like, such that some of the services or applications cannot be stably executed.

### SUMMARY

It is an objective of the present disclosure to provide a signal processing device capable of efficiently executing or managing services, and a vehicle communication device including the signal processing device.

It is another objective of the present disclosure to provide a signal processing device capable of dynamically executing or managing services, and a vehicle communication device including the signal processing device.

It is yet another objective of the present disclosure to provide a signal processing device capable of migrating and executing services based on multipath routing, and a vehicle communication device including the signal processing device.

It is yet another objective of the present disclosure to provide a signal processing device capable of executing or reexecuting or managing services at a current location or another location, if necessary, during service update, and a vehicle communication device including the signal processing device.

In accordance with an aspect of the present disclosure, the above and other objectives can be accomplished by providing a signal processing device and a vehicle communication device including the same, which include: a network controller configured to control multipath routing for at least one of a plurality of zonal signal processing devices; and a network switch configured to perform network switching, wherein the network controller is configured to migrate a first service executed in a first zonal signal processing device among the plurality of zonal signal processing devices, and to execute a second service corresponding to the first service in a second zonal signal processing device.

Meanwhile, in order to execute the second service, the network controller can be configured to select at least one of the plurality of zonal signal processing devices, and to execute the second service in the selected second zonal signal processing device.

Meanwhile, in response to network usage of the first service increasing to maximum during a reference time period or more, the network controller can be configured to determine to migrate the first service.

Meanwhile, the network controller can be configured to select the second zonal signal processing device based on network availability, the number of network connections, or the number of network paths for migrating the first service.

Meanwhile, in response to a zonal signal processing device being added, the network controller can be configured to recognize the added zonal signal processing device based on network usage of the added zonal signal processing device, and in response to service migration being required, the network controller can be configured to execute a service corresponding to the first service in the added zonal signal processing device.

Meanwhile, the network controller can be configured to store an execution location of the second service, or to set or reset a networking path for the execution location of the second service.

Meanwhile, the network controller can be configured to migrate a third service executed in the signal processing device, to execute a fourth service corresponding to the third service in at least one of the plurality of zonal signal processing devices.

Meanwhile, the network controller can be configured to make an inquiry about the service migration to at least one of the plurality of zonal signal processing devices, and in response to receiving a service migration request from the first zonal signal processing device, the network controller can be configured to determine a migration location of a corresponding service and to transmit a request for executing the service to the second zonal signal processing device corresponding to the determined location.

Meanwhile, the network controller can be configured to transmit the request for executing the service to the zonal signal processing device corresponding to the determined location, and after execution of the service requested by the zonal signal processing device is started, the network controller can be configured to transmit a request for terminating the service to the zonal signal processing device that has transmitted the service migration request.

Meanwhile, upon receiving execution information of the second service from the second zonal signal processing device, the network controller can be configured to update the execution information of the second service in a service registry.

Meanwhile, the signal processing device and the vehicle communication device according to an embodiment of the present disclosure can further include a processor including the network controller and the network switch, wherein the processor can be configured to execute at least one operating system on a hypervisor, and to execute a plurality of virtual machines on the operating system.

Meanwhile, the network controller can be configured to migrate a fifth service executed on the operating system, to execute a sixth service corresponding to the fifth service on a second operating system of one of the plurality of zonal signal processing devices.

Meanwhile, the network controller can be configured to migrate a seventh service executed on the first operating system on the hypervisor, to execute control an eighth service corresponding to the seventh service on the second operating system on the hypervisor.

Meanwhile, the network controller can be configured to migrate a ninth service executed on a first virtual machine among the plurality of virtual machines, to execute a tenth service corresponding to the ninth service on a second virtual machine among the plurality of virtual machines.

Meanwhile, the network controller can be configured to rearrange a service on a container basis.

Meanwhile, the network controller can be configured to rearrange the service between a first container and a second container, or between the first container and the virtual machine, or between the first container and the operating system on the hypervisor, or between the virtual machine and the operating system on the hypervisor.

In accordance with another aspect of the present disclosure, the above and other objectives can be accomplished by providing a signal processing device and a vehicle communication device including the same, which include: a network node manager configured to manage a network node for multipath routing; and a network switch configured to perform network switching, wherein the network node manager is configured to execute or terminate a corresponding service based on receiving a service execution request.

Meanwhile, upon executing the service, the network node manager can be configured to transmit execution information of the service to outside.

Meanwhile, the network node manager can be configured to execute: a service migration handler configured to request migration and execution of the service; a service watcher configured to check status of the service; and a service recoverer configured to request reexecution processing of the service.

### EFFECTS OF THE DISCLOSURE

A signal processing device and a vehicle communication device including the same according to an embodiment of the present disclosure include: a network controller configured to control multipath routing for at least one of a plurality of zonal signal processing devices; and a network switch configured to perform network switching, wherein the network controller is configured to migrate a first service executed in a first zonal signal processing device among the plurality of zonal signal processing devices, and to execute a second service corresponding to the first service in a second zonal signal processing device. Accordingly, services can be efficiently executed or managed. Further, services can be dynamically executed or managed. In addition, services can be migrated and executed based on multipath routing.

Meanwhile, in order to execute the second service, the network controller can be configured to select at least one of the plurality of zonal signal processing devices, and to execute the second service in the selected second zonal signal processing device. Accordingly, services can be efficiently executed or managed.

Meanwhile, in response to network usage of the first service increasing to maximum during a reference time period or more, the network controller can be configured to determine to migrate the first service. Accordingly, services can be efficiently executed or managed.

Meanwhile, the network controller can be configured to select the second zonal signal processing device based on network availability, the number of network connections, or the number of network paths for migrating the first service. Accordingly, services can be efficiently executed or managed.

Meanwhile, in response to a zonal signal processing device being added, the network controller can be configured to recognize the added zonal signal processing device based on network usage of the added zonal signal processing device, and in response to service migration being required, the network controller can be configured to execute a service corresponding to the first service in the added zonal signal processing device. Accordingly, services can be efficiently executed or managed.

Meanwhile, the network controller can be configured to store an execution location of the second service, or to set or reset a networking path for the execution location of the second service. Accordingly, services can be efficiently executed or managed.

Meanwhile, the network controller can be configured to migrate a third service executed in the signal processing device, to execute a fourth service corresponding to the third service in at least one of the plurality of zonal signal processing devices. Accordingly, services can be efficiently executed or managed.

Meanwhile, the network controller can be configured to make an inquiry about the service migration to at least one of the plurality of zonal signal processing devices, and in response to receiving a service migration request from the first zonal signal processing device, the network controller can be configured to determine a migration location of a corresponding service and to transmit a request for executing the service to the second zonal signal processing device corresponding to the determined location. Accordingly, services can be efficiently executed or managed.

Meanwhile, the network controller can be configured to transmit the request for executing the service to the zonal signal processing device corresponding to the determined location, and after execution of the service requested by the zonal signal processing device is started, the network controller can be configured to transmit a request for terminating the service to the zonal signal processing device that has transmitted the service migration request. Accordingly, services can be efficiently executed or managed.

Meanwhile, upon receiving execution information of the second service from the second zonal signal processing device, the network controller can be configured to update the execution information of the second service in a service registry. Accordingly, services can be efficiently executed or managed.

Meanwhile, the signal processing device and the vehicle communication device according to an embodiment of the present disclosure can further include a processor including the network controller and the network switch, wherein the processor can be configured to execute at least one operating system on a hypervisor, and to execute a plurality of virtual machines on the operating system. Accordingly, services can be efficiently executed or managed.

Meanwhile, the network controller can be configured to migrate a fifth service executed on the operating system, to execute a sixth service corresponding to the fifth service on a second operating system of one of the plurality of zonal signal processing devices. Accordingly, services can be efficiently executed or managed.

Meanwhile, the network controller can be configured to migrate a seventh service executed on the first operating system on the hypervisor, to execute control an eighth service corresponding to the seventh service on the second operating system on the hypervisor. Accordingly, services can be efficiently executed or managed.

Meanwhile, the network controller can be configured to migrate a ninth service executed on a first virtual machine among the plurality of virtual machines, to execute a tenth service corresponding to the ninth service on a second virtual machine among the plurality of virtual machines. Accordingly, services can be efficiently executed or managed.

Meanwhile, the network controller can be configured to rearrange a service on a container basis. Accordingly, services can be efficiently executed or managed.

Meanwhile, the network controller can be configured to rearrange the service between a first container and a second container, or between the first container and the virtual machine, or between the first container and the operating system on the hypervisor, or between the virtual machine and the operating system on the hypervisor. Accordingly, services can be efficiently executed or managed.

A signal processing device and a vehicle communication device including the same according to another embodiment of the present disclosure include: a network node manager configured to manage a network node for multipath routing; and a network switch configured to perform network switching, wherein the network node manager is configured to execute or terminate a corresponding service based on receiving a service execution request. Accordingly, services can be efficiently executed or managed. Further, services can be dynamically executed or managed. In addition, services can be migrated and executed based on multipath routing.

Meanwhile, upon executing the service, the network node manager can be configured to transmit execution information of the service to outside. Accordingly, services can be efficiently executed or managed.

Meanwhile, the network node manager can be configured to execute: a service migration handler configured to request migration and execution of the service; a service watcher configured to check status of the service; and a service recoverer configured to request reexecution processing of the service. Accordingly, services can be efficiently executed or managed.

### BRIEF DESCRIPTION OF THE DRAWINGS

FIG. 1 is a view showing an example of the exterior and interior of a vehicle;
FIGS. 2A to 2C are diagrams illustrating various architectures of a vehicle communication gateway according to an embodiment of the present disclosure;
FIG. 3 is an exemplary internal block diagram of a signal processing device of FIG. 2A;
FIG. 4A is a diagram illustrating an example of an arrangement of a vehicle display apparatus in a vehicle according to an embodiment of the present disclosure;
FIG. 4B is a diagram illustrating another example of an arrangement of a vehicle display apparatus in a vehicle according to an embodiment of the present disclosure;
FIG. 5 is an internal block diagram illustrating the vehicle display apparatus of FIG. 4B;
FIG. 6 is an internal block diagram illustrating an example of a vehicle communication device;
FIG. 7 is an internal block diagram illustrating another example of a vehicle communication device;
FIGS. 8A to 8D are diagrams illustrating various examples of a vehicle communication device;
FIG. 9A is a diagram illustrating an example of a vehicle communication device according to an embodiment of the present disclosure;
FIG. 9B is a diagram illustrating another example of a vehicle communication device according to an embodiment of the present disclosure;
FIGS. 10A and 10B are diagrams referred to in the description of operation FIG. 9A or FIG. 9B;
FIGS. 11A and 11B are diagrams referred to in the description of a vehicle communication device associated with the present disclosure;
FIG. 12 is a diagram illustrating a vehicle communication device according to an embodiment of the present disclosure;
FIG. 13 is a flowchart illustrating an example of operation of a signal processing device according to an embodiment of the present disclosure;
FIG. 14 is a flowchart illustrating an example of operation of a vehicle communication device according to an embodiment of the present disclosure;
FIG. 15 is a flowchart illustrating another example of operation of a signal processing device according to an embodiment of the present disclosure; and
FIG. 16 is a diagram referred to in the description of a vehicle communication device according to an embodiment of the present disclosure.

### DETAILED DESCRIPTION

Hereinafter, the present disclosure will be described in detail with reference to the accompanying drawings.

With respect to constituent elements used in the following description, suffixes "module" and "unit" are given only in consideration of ease in preparation of the specification, and do not have or serve different meanings. Accordingly, the suffixes "module" and "unit" can be used interchangeably.

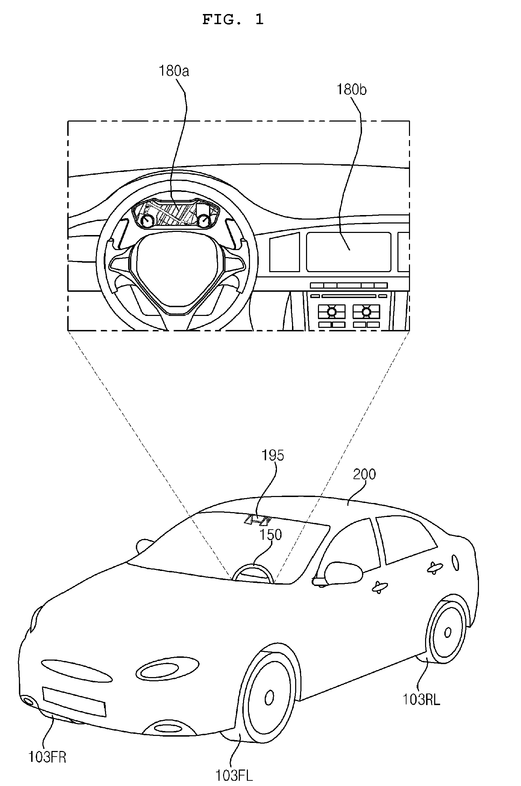

FIG. 1 is a view showing an example of the exterior and interior of a vehicle.

Referring to the figure, the vehicle 200 is moved by a plurality of wheels 103FR, 103FL, 103RL,... rotated by a power source and a steering wheel 150 configured to adjust an advancing direction of the vehicle 200.

Meanwhile, the vehicle 200 can be provided with a camera 195 configured to acquire an image of the front of the vehicle.

Meanwhile, the vehicle 200 can be further provided therein with a plurality of displays 180a and 180b configured to display images and information.

In FIG. 1, a cluster display 180a and an audio video navigation (AVN) display 180b are illustrated as the plurality of displays 180a and 180b. In addition, a head up display (HUD) can also be used.

Meanwhile, the audio video navigation (AVN) display 180b can also be called a center information display.

Meanwhile, the vehicle 200 described in this specification can be a concept including all of a vehicle having an engine as a power source, a hybrid vehicle having an engine and an electric motor as a power source, and an electric vehicle having an electric motor as a power source.

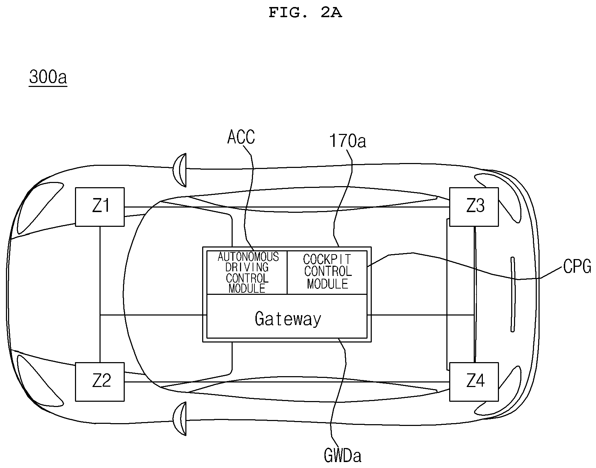

FIGS. 2A to 2C are diagrams illustrating various architectures of a vehicle communication gateway according to an embodiment of the present disclosure.

First, FIG. 2A is a diagram illustrating a first architecture of a vehicle communication gateway according to an embodiment of the present disclosure.

Referring to the drawing, the first architecture 300a can correspond to a zone-based architecture.

Accordingly, in-vehicle sensor devices and processors can be mounted in each of a plurality of zones Z1 to Z4, and a signal processing device 170a including a vehicle communication gateway GWDa can be disposed at the center of the plurality of zones Z1 to Z4.

Meanwhile, the signal processing device 170a can further include a self-driving control module ACC, a cockpit control module CPG, etc., in addition to the vehicle communication gateway GWDa.

The vehicle communication gateway GWDa in the signal processing device 170a can be a High Performance Computing (HPC) gateway.

That is, as an integrated HPC gateway, the signal processing device 170a of FIG. 2A can exchange data with an external communication module (not shown) or processors (not shown) in the plurality of zones Z1 to Z4.

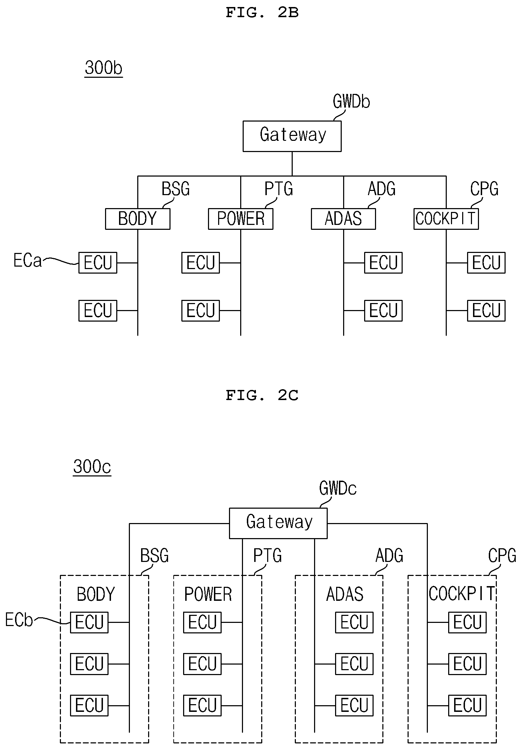

FIG. 2B is a diagram illustrating a second architecture of a vehicle communication gateway according to an embodiment of the present disclosure.

Referring to the drawing, a second architecture 300b can correspond to a domain integrated architecture.

Accordingly, a body chassis control module (BSG), a power control module (PTG), an ADAS control module (ADG), and a cockpit control module (CPG) are connected in parallel to a gateway GWDb, and a plurality of processors ECU can be electrically connected to the respective modules BSG, PTG, ADG, and CPG.

Meanwhile, the respective processors ECU can be connected to the gateway GWDb while being integrated therein.

Meanwhile, the signal processing device 170 including the gateway GWDb of FIG. 2B can function as a domain integrated signal processing device.

FIG. 2C is a diagram illustrating a third architecture of a vehicle communication gateway according to an embodiment of the present disclosure.

Referring to the drawing, a third architecture 300c can correspond to a distributed architecture.

Accordingly, the body chassis control module (BSG), the power control module (PTG), the ADAS control module (ADG), and the cockpit control module (CPG) are connected in parallel to a gateway GWDc, and particularly a plurality of processors ECU in the respective control modules can be electrically connected in parallel to the gateway GWDc.

Upon comparison with FIG. 2B, the third architecture has a difference in that the respective processors ECU are connected directly to the gateway GWDc without being connected to another module.

Meanwhile, the signal processing device 170 including the gateway GWDc of FIG. 2C functions as a distributed signal processing device.

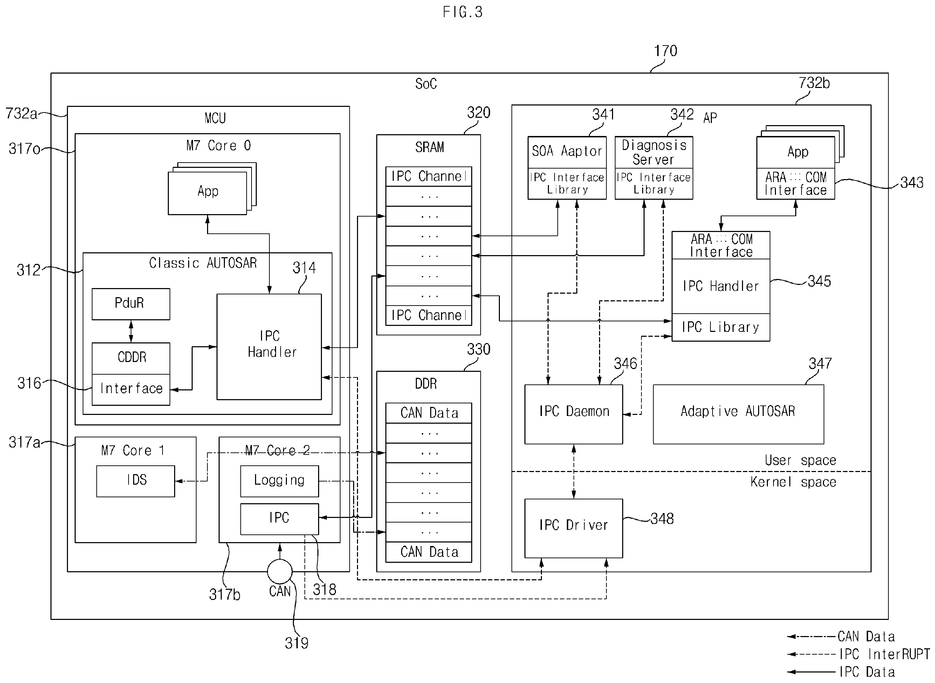

FIG. 3 is an exemplary internal block diagram of a signal processing device of FIG. 2A.

Referring to the drawing, the signal processing device 170 according to an embodiment of the present disclosure includes: a first processor 732a, which based on a first communication scheme, is configured to receive a first message including a sensor signal in a vehicle and to perform signal processing on the received first message; and a second processor 732b, which based a second communication scheme, is configured to receive a second message including a communication message received from an external source and to perform signal processing of the received second message.

In this case, the second communication scheme can have a faster communication speed or a wider bandwidth than the first communication scheme.

For example, the second communication scheme can be Ethernet communication, and the first communication scheme can be CAN communication. Accordingly, the first message can be a CAN message, and the second message can be an Ethernet message.

Meanwhile, the signal processing device 170 according to an embodiment of the present disclosure further includes: a first memory 320 having an IPC channel; and a second memory 330 storing sensor data including vehicle speed data.

For example, the first memory 320 can be a Static RAM (SRAM), and the second memory 330 can be a DDR memory. Particularly, the second memory 330 can be a Double data rate synchronous dynamic random access memory (DDR SDRAM).

Meanwhile, the signal processing device 170 according to an embodiment of the present disclosure includes a shared memory 508 which operates for transmitting the first message or the second message between the first processor 732a and the second processor 732b.

As described above, by performing inter-processor communication using the shared memory 508 during the communication between the first processor 732a and the second processor 732b, latency can be reduced and high-speed data transmission can be performed during inter-processor communication.

Meanwhile, it is desired that the shared memory 508 is provided in the first memory 320. Accordingly, latency can be reduced and high-speed data transmission can be performed during inter-processor communication.

Meanwhile, the first processor 732a can include a plurality of processor cores 317o, 317a, and 317b disposed therein.

Meanwhile, the first processor 732a can further include an interface 319 for receiving the CAN message from external vehicle sensors.

For example, a first processor core 317o included in the first processor 732a can execute a plurality of applications or can execute a first AUTomotive Open System Architecture (AUTOSAR) 312.

Particularly, by executing a second AUTOSAR 312, the first processor core 317o can execute an inter-processor communication (IPC) handler 314.

Meanwhile, the IPC handler 314 can exchange data with the first memory 320 or can exchange IPC data with an application running on the core 317o.

Meanwhile, the IPC handler 314 can exchange an interrupt signal with an IPC driver 348 included in the second processor 732b.

Meanwhile, a second processor core 317a included in the first processor 732a can execute IDS and can receive CAN data from the second memory 330.

Meanwhile, a third core 317b included in the first processor 732a can execute Logging, and can store the CAN data, received through the interface 319, in the second memory 330.

Meanwhile, the third processor core 317b included in the first processor 732a can execute an IPC module 318 to exchange IPC data with the first memory 320.

Meanwhile, the third processor core 317b included in the first processor 732a can transmit an interrupt signal to the IPC driver 348 in the second processor 732b.

The first memory 320 can exchange the IPC data with the IPC handler 314 or the IPC module 318.

Meanwhile, the second processor 732b can execute an application 343, the IPC handler 345, an IPC daemon 346, the IPC driver 348, and the like.

Meanwhile, the second processor 732b can further execute a service oriented architecture (SOA) adapter 341, a diagnosis server 342, and the second AUTOSAR 347.

The second AUTOSAR 347 can be an adaptive AUTOSAR, and the first AUTOSAR 312 can be a classic AUTOSAR.

The IPC daemon 346 can exchange an interrupt signal with the SOA adapter 341, the diagnosis server 342, the IPC handler 345, the IPC driver 348, and the like.

Meanwhile, the first memory 320 can exchange IPC data with the SOA adapter 341, the diagnosis server 342, the IPC handler 345, and the like.

Meanwhile, the IPC data described with reference to FIG. 3 can be the CAN message or Ethernet message.

Meanwhile, the IPC handler 345 can function as a service provider providing data such as diagnosis, firmware, upgrade, system information, etc., based on the second AUTOSAR 347.

Meanwhile, although not illustrated in FIG. 3, the first processor 732a implements a message router (not shown), and the message router can convert a frame of the first message, such as the CAN message, into a frame format of the second message, such as the Ethernet message, and can transmit the converted message to the second processor 732b.

Meanwhile, although not illustrated in FIG. 3, the first processor 732a can further implement a CAN driver (not shown) and a CAN interface (not shown).

For example, the CAN interface (not shown) can be implemented by a total of 16 channels, with eight channels of each of a fourth processor core (not shown) and a fifth processor core (not shown) in the first processor 732a.

In this case, a first CAN interface (not shown) implemented on the fourth processor core (not shown) can correspond to a first queue (PTb) during inter-processor communication, and a second CAN interface (not shown) implemented on the fifth processor core (not shown) can correspond to a second queue (PTb), having a higher priority than the first queue (PTb), during inter-processor communication.

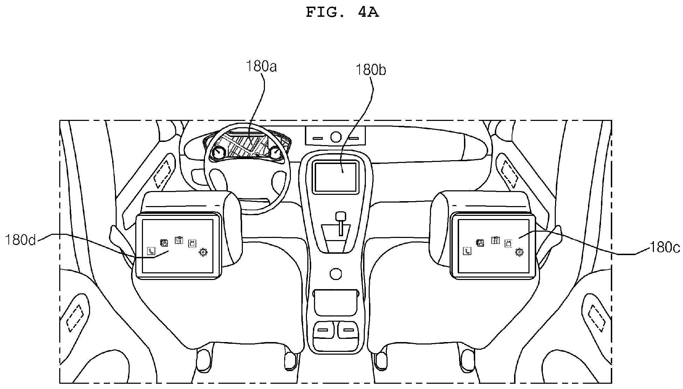

FIG. 4A is a diagram illustrating an example of an arrangement of a vehicle display apparatus in a vehicle according to an embodiment of the present disclosure.

Referring to the figure, a cluster display 180a, an audio video navigation (AVN) display 180b, rear seat entertainment displays 180c and 180d, and a rear-view mirror display (not shown) can be mounted in the vehicle.

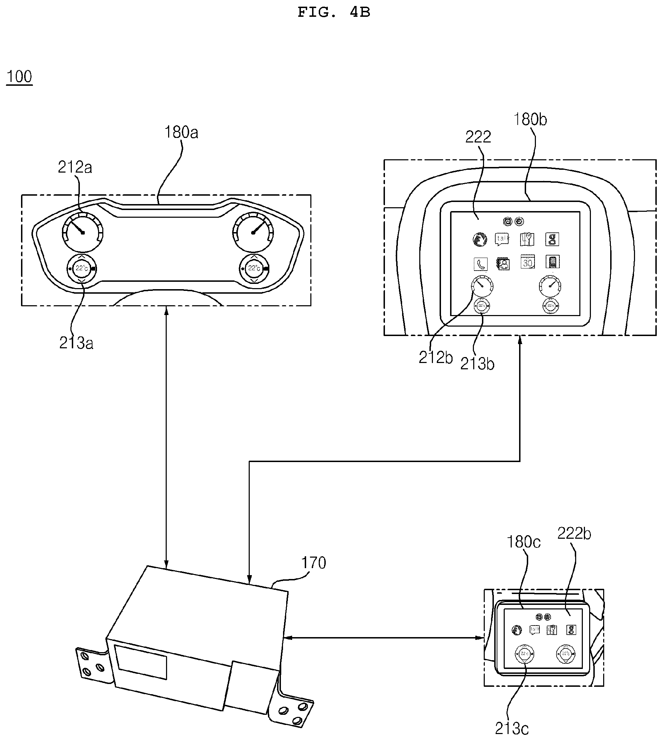

FIG. 4B is a diagram illustrating another example of an arrangement of a vehicle display apparatus in a vehicle according to an embodiment of the present disclosure.

The vehicle display apparatus 100 according to the embodiment of the present disclosure can include a plurality of displays 180a and 180b and a signal processing device 170 configured to perform signal processing in order to display images and information on the plurality of displays 180a and 180b.

The first display 180a, which is one of the plurality of displays 180a and 180b, can be a cluster display 180a configured to display a driving state and operation information, and the second display 180b can be an audio video navigation (AVN) display 180b configured to display vehicle driving information, a navigation map, various kinds of entertainment information, or an image.

The signal processing device 170 can have a processor 175 provided therein, and first to third virtual machines (not shown) can be executed by a hypervisor 505 in the processor 175.

The second virtual machine (not shown) can be operated for the first display 180a, and the third virtual machine (not shown) can be operated for the second display 180b.

Meanwhile, the first virtual machine (not shown) in the processor 175 can be configured to set a shared memory 508 based on the hypervisor 505 for transmission of the same data to the second virtual machine (not shown) and the third virtual machine (not shown). Consequently, the first display 180a and the second display 180b in the vehicle can display the same information or the same images in a synchronized state.

Meanwhile, the first virtual machine (not shown) in the processor 175 shares at least some of data with the second virtual machine (not shown) and the third virtual machine (not shown) for divided processing of data. Consequently, the plurality of virtual machines for the plurality of displays in the vehicle can divide and process data.

Meanwhile, the first virtual machine (not shown) in the processor 175 can receive and process wheel speed sensor data of the vehicle, and can transmit the processed wheel speed sensor data to at least one of the second virtual machine (not shown) or the third virtual machine (not shown). Consequently, at least one virtual machine can share the wheel speed sensor data of the vehicle.

Meanwhile, the vehicle display apparatus 100 according to the embodiment of the present disclosure can further include a rear seat entertainment (RSE) display 180c configured to display driving state information, simple navigation information, various kinds of entertainment information, or an image.

The signal processing device 170 can further execute a fourth virtual machine (not shown), in addition to the first to third virtual machines (not shown), on the hypervisor 505 in the processor 175 to control the RSE display 180c.

Consequently, it is possible to control various displays 180a to 180c using a single signal processing device 170.

Meanwhile, some of the plurality of displays 180a to 180c can be operated based on a Linux Operating System (OS), and others can be operated based on a Web Operating System (OS).

The signal processing device 170 according to the embodiment of the present disclosure can be configured to display the same information or the same images in a synchronized state on the displays 180a to 180c to be operated under various operating systems.

Meanwhile, FIG. 4B illustrates that a vehicle speed indicator 212a and an in-vehicle temperature indicator 213a are displayed on the first display 180a, a home screen 222 including a plurality of applications, a vehicle speed indicator 212b, and an in-vehicle temperature indicator 213b is displayed on the second display 180b, and a second home screen 222b including a plurality of applications and an in-vehicle temperature indicator 213c is displayed on the third display 180c.

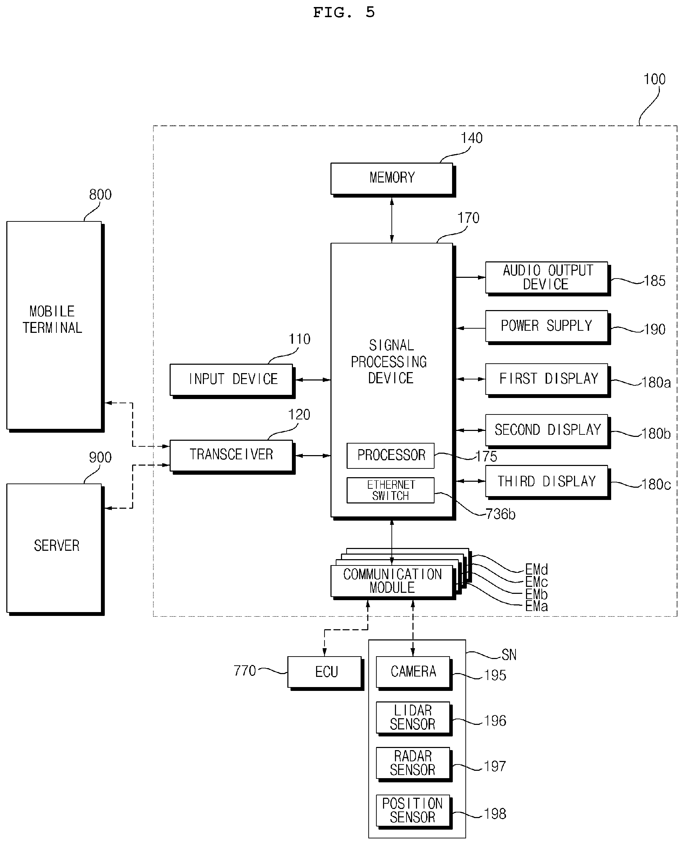

FIG. 5 is an internal block diagram illustrating the vehicle display apparatus of FIG. 4B according to the embodiment of the present disclosure.

Referring to the figure, the vehicle display apparatus 100 according to the embodiment of the present disclosure can include an input device 110, a transceiver 120 for communication with an external device, a plurality of communication modules EMa to EMd for internal communication, a memory 140, a signal processing device 170, a plurality of displays 180a to 180c, an audio output device 185, and a power supply 190.

The plurality of communication modules EMa to EMd can be disposed in a plurality of zones Z1 to Z4, respectively, in FIG. 2A.

Meanwhile, the signal processing device 170 can be provided therein with an Ethernet switch 736b for data communication with the respective communication modules EM1 to EM4.

The respective communication modules EM1 to EM4 can perform data communication with a plurality of sensor devices SN or an ECU 770.

Meanwhile, each of the plurality of sensor devices SN can include a camera 195, a lidar sensor 196, a radar sensor 197, or a position sensor 198.

The input device 110 can include a physical button or pad for button input or touch input.

Meanwhile, the input device 110 can include a microphone (not shown) for user voice input.

The transceiver 120 can wirelessly exchange data with a mobile terminal 800 or a server 900.

In particular, the transceiver 120 can wirelessly exchange data with a mobile terminal of a vehicle driver. Any of various data communication schemes, such as Bluetooth, Wi-Fi, WIFI Direct, and APIX, can be used as a wireless data communication scheme.

The transceiver 120 can receive weather information and road traffic situation information, such as transport protocol expert group (TPEG) information, from the mobile terminal 800 or the server 900. To this end, the transceiver 120 can include a mobile communication module (not shown).

The plurality of communication modules EM1 to EM4 can receive sensor data from an electronic control unit (ECU) 770 or a sensor device SN, and can transmit the received sensor data to the signal processing device 170.

Here, the sensor data can include at least one of vehicle direction data, vehicle position data (global positioning system (GPS) data), vehicle angle data, vehicle speed data, vehicle acceleration data, vehicle inclination data, vehicle forward/backward movement data, battery data, fuel data, tire data, vehicle lamp data, vehicle internal temperature data, and vehicle internal humidity data.

The sensor data can be acquired from a heading sensor, a yaw sensor, a gyro sensor, a position sensor, a vehicle forward/backward movement sensor, a wheel sensor, a vehicle speed sensor, a car body inclination sensor, a battery sensor, a fuel sensor, a tire sensor, a steering-wheel-rotation-based steering sensor, a vehicle internal temperature sensor, or a vehicle internal humidity sensor.

Meanwhile, the position module can include a GPS module configured to receive GPS information or a position sensor 198.

Meanwhile, at least one of the plurality of communication modules EM1 to EM4 can transmit position information data sensed by the GPS module or the position sensor 198 to the signal processing device 170.

Meanwhile, at least one of the plurality of communication modules EM1 to EM4 can receive front-of-vehicle image data, side-of-vehicle image data, rear-of-vehicle image data, and obstacle-around-vehicle distance information from the camera 195, the lidar sensor 196, or the radar sensor 197, and can transmit the received information to the signal processing device 170.

The memory 140 can store various data necessary for overall operation of the vehicle display apparatus 100, such as programs for processing or control of the signal processing device 170.

For example, the memory 140 can store data about the hypervisor and first to third virtual machines executed by the hypervisor in the processor 175.

The audio output device 185 can convert an electrical signal from the signal processing device 170 into an audio signal, and can output the audio signal. To this end, the audio output device 185 can include a speaker.

The power supply 190 can supply power necessary to operate components under the control of the signal processing device 170. In particular, the power supply 190 can receive power from a battery in the vehicle.

The signal processing device 170 can control overall operation of each device in the vehicle display apparatus 100.

For example, the signal processing device 170 can include a processor 175 configured to perform signal processing for the vehicle displays 180a and 180b.

The processor 175 can execute the first to third virtual machines (not shown) on the hypervisor (not shown) in the processor 175.

Among the first to third virtual machines (not shown), the first virtual machine (not shown) can be called a server virtual machine, and the second and third virtual machines (not shown) can be called guest virtual machines.

For example, the first virtual machine (not shown) in the processor 175 can receive sensor data from the plurality of sensor devices, such as vehicle sensor data, position information data, camera image data, audio data, or touch input data, and can process and output the received sensor data.

As described above, the first virtual machine (not shown) can process most of the data, whereby 1:N data sharing can be achieved.

In another example, the first virtual machine (not shown) can directly receive and process CAN data, Ethernet data, audio data, radio data, USB data, and wireless communication data for the second and third virtual machines (not shown).

Further, the first virtual machine (not shown) can transmit the processed data to the second and third virtual machines (not shown).

Accordingly, only the first virtual machine (not shown), among the first to third virtual machines (not shown), can receive sensor data from the plurality of sensor devices, communication data, or external input data, and can perform signal processing, whereby load in signal processing by the other virtual machines can be reduced and 1:N data communication can be achieved, and therefore synchronization at the time of data sharing can be achieved.

Meanwhile, the first virtual machine (not shown) can be configured to write data in the shared memory 508, whereby the second virtual machine (not shown) and the third virtual machine (not shown) share the same data.

For example, the first virtual machine (not shown) can be configured to write vehicle sensor data, the position information data, the camera image data, or the touch input data in the shared memory 508, whereby the second virtual machine (not shown) and the third virtual machine (not shown) share the same data. Consequently, 1:N data sharing can be achieved.

Eventually, the first virtual machine (not shown) can process most of the data, whereby 1:N data sharing can be achieved.

Meanwhile, the first virtual machine (not shown) in the processor 175 can be configured to set the shared memory 508 based on the hypervisor 505 in order to transmit the same data to the second virtual machine (not shown) and the third virtual machine (not shown).

Meanwhile, the signal processing device 170 can process various signals, such as an audio signal, an image signal, and a data signal. To this end, the signal processing device 170 can be implemented in the form of a system on chip (SOC).

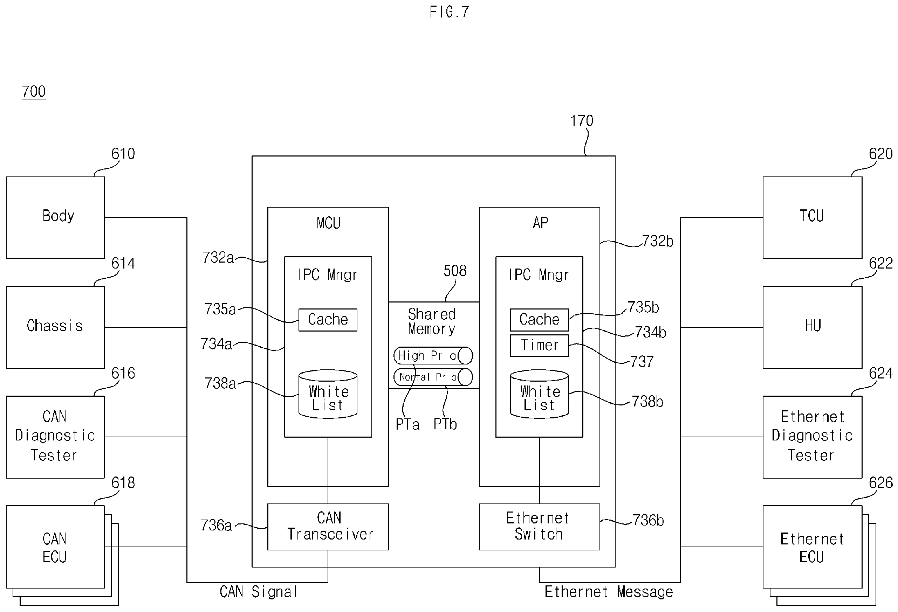

Meanwhile, the signal processing device 170 included in the display apparatus 100 of FIG. 5 can be the same as the signal processing device 170 of a vehicle communication device 700 of FIG. 7 and the like.

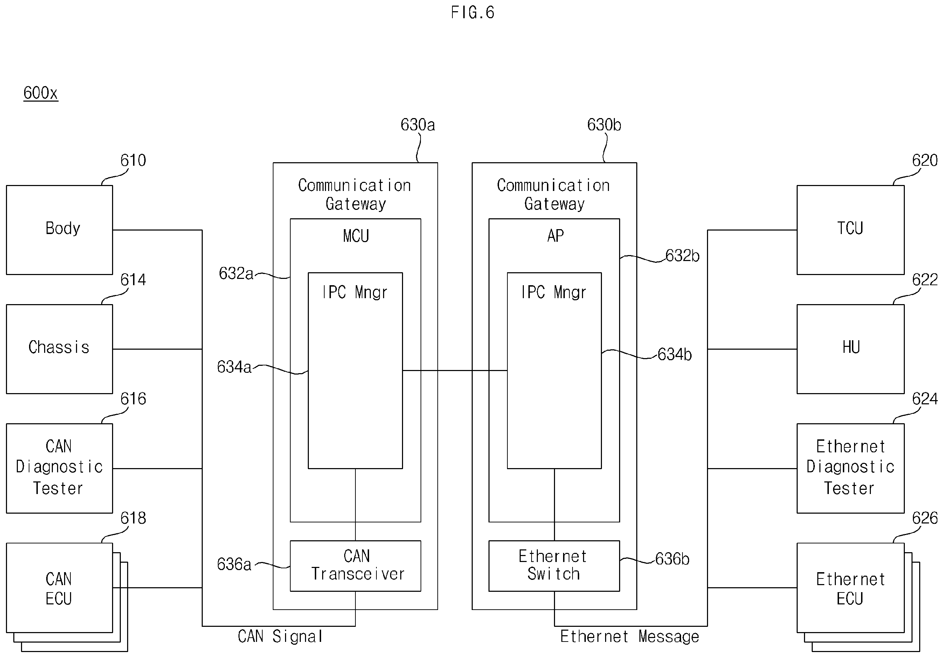

FIG. 6 is an internal block diagram illustrating an example of a vehicle communication device.

Referring to the drawing, a vehicle communication device 600x associated with the present disclosure can include a first communication gateway 630a and a second communication gateway 630b.

The first communication gateway 630a can include a body module 610, a chassis module 614, a CAN diagnostic tester 616, a CAN transceiver 636a for exchanging a CAN signal by CAN communication with at least one CAN ECU 618 and the like, and a first processor 632a for performing signal processing on the CAN signal received from the CAN transceiver 636a.

Meanwhile, the first processor 632a can include an IPC manager 634a for inter-processor communication with a second processor 632b in the second communication gateway 630b.

The second communication gateway 630b can include a telematics control module 620, a head module 622, an Ethernet diagnostic tester 624, an Ethernet switch 636b for exchanging an Ethernet message by Ethernet communication with at least one Ethernet ECU 626, and a second processor 632b for performing signal processing on the Ethernet message received from the Ethernet switch 636b.

Meanwhile, the second processor 632b can include an IPC manager 634b for inter-processor communication with the first processor 632a in the first communication gateway 630a.

Meanwhile, the IPC manager 634a in the first processor 632a and the IPC manager 643b in the second processor 632b can perform inter-processor communication based on the Ethernet communication.

While the inter-processor communication is suitable for high-speed transmission of large data using a high bandwidth based on Ethernet, the communication method has a drawback in that latency occurs in communication between a protocol stack and a Physical Layer (PHY).

Accordingly, the present disclosure provides a method of reducing latency and performing high-speed data transmission during inter-processor communication, which will be described below with reference to FIG. 7 and subsequent figures.

FIG. 7 is an internal block diagram illustrating another example of a vehicle communication device.

Referring to the drawing, the vehicle communication device 700 according to an embodiment can include: a first processor 732a, which based on a first communication scheme along with a first communication gateway 730a and a second communication gateway 730b, is configured to receive a first message including a sensor signal in a vehicle and to perform signal processing on the received first message; a second processor 732b, which based a second communication scheme, is configured to receive a second message including a communication message received from an external source and to perform signal processing of the received second message; and a shared memory 508 configured to operate to transmit the first message or the second message between the first processor 732a and the second processor 732b.

In comparison with the communication device 600x of FIG. 6, by using the shared memory 508 for inter-processor communication (IPC) between the first processor 732a and the second processor 732b, it is possible to reduce latency and to perform high-speed data transmission during the inter-processor communication.

In addition, in comparison with the communication device 600x of FIG. 6, by providing the first processor 732a, the second processor 732b, and the shared memory 508 in one signal processing device 170 implemented as a single chip, it is possible to reduce latency and to perform high-speed data transmission during the inter-processor communication.

Meanwhile, it is preferred that the second communication scheme has a faster communication speed or a wider bandwidth than the first communication scheme.

For example, the second communication scheme can be Ethernet communication, and the first communication scheme can be CAN communication. Accordingly, the first message can be a CAN message, and the second message can be an Ethernet message.

Meanwhile, the signal processing device 170 and the vehicle communication device 700 including the same according to an embodiment of the present disclosure can further include: a transceiver 736a, which based on the first communication scheme, is configured to receive a first message including a sensor signal in a vehicle and transmit the first message to the first processor 732a; and the switch 736b, which based on the second communication scheme, is configured to receive a second message including a communication message received from an external source, and transmit the second message to the second processor 732b, such that the first and second messages can be transmitted stably to the first processor 732a and the second processor 732b.

The first processor 732a or the transceiver 736a can exchange a CAN signal by CAN communication with the body module 610, the chassis module 614, the CAN diagnostic tester 616, at least one CAN ECU 618, and the like.

Meanwhile, the first processor 732a can include a first manager 734a for inter-processor communication (IPC) with the second processor 732b. The first manager 734a can be referred to as an IPC manager.

Meanwhile, the first manager 734a can include a first cache 735a.

Meanwhile, the second processor 732b or the switch 736b can exchange an Ethernet message by Ethernet communication with the telematics control module 620, the head module 622, the Ethernet diagnostic tester 624, at least one Ethernet ECU 626, and the like. The switch 736b can be referred to as an Ethernet switch.

Meanwhile, the second processor 732b can include a second manager 734b for inter-processor communication (IPC) with the first processor 732a. The second manager 734a can be referred to as an IPC manager.

Meanwhile, the second manager 734b can include the second manager 734b including a second cache 735b and a timer 737.

Meanwhile, the second processor 723b can receive a request for periodic subscription to the first message from the Ethernet processor or the Ethernet ECU 626.

Accordingly, the second processor 732b can transmit the request for periodic subscription to the first message to the first processor 732a.

Particularly, the second processor 732b can transmit the subscription request through the inter-processor communication (IPC). Accordingly, the inter-processor communication can be performed.

Meanwhile, the first processor 732a can periodically receive CAN data from the at least one CAN ECU 618 and the like.

For example, the first processor 732a periodically receives the first message, predefined in a CAN database (DB), from the at least one CAN ECU 618 and the like.

For example, the periodic first message, which is sensor data, can include vehicle speed information, position information, or the like.

In another example, the periodic first message can include at least one of vehicle direction information, vehicle position information (GPS information), vehicle angle information, vehicle acceleration information, vehicle tilt information, forward/backward movement information, battery information, fuel information, tire information, vehicle lamp information, in-vehicle temperature information, and in-vehicle humidity information.

Meanwhile, the first processor 732a can select a first message, for which the subscription is requested, among the periodically received CAN data or first messages, and can transmit the first message, for which the subscription is requested, to the second processor 732b.

Meanwhile, the first processor 732a can separately process a first message, for which the subscription is not requested, among the periodically received CAN data or first messages, without transmitting the message to the second processor 732b.

Specifically, upon receiving the first message for which the subscription is requested, the first processor 732a can store the first message in the first cache 735a or can manage the first message. Upon receiving the first message, the first processor 732a can compare the first message with a value stored in the first cache 735a, and in the case in which a difference therebetween is greater than or equal to a predetermined value, the first processor 732a can transmit the first message to the second processor 732b through the inter-processor communication.

Meanwhile, upon receiving the first message for which the subscription is requested, the first processor 732a can store the first message in the first cache 735a or can manage the first message. Upon receiving the first message, the first processor 732a can compare the first message with a value stored in the first cache 735a, and in the case in which a difference therebetween is greater than or equal to a predetermined value, the first processor 732a can transmit the first message to the second processor 732b through the inter-processor communication using the shared memory 508.

For example, upon receiving the first message, the first processor 732a can compare the message with a value stored in the first cache 735a, and in the case in which the two are not the same, the first processor 732a can transmit the first message to the second processor 732b through the inter-processor communication using the shared memory 508.

In another example, upon receiving the first message, the first processor 732a can compare the message with the value stored in the first cache 735a, and in the case in which the two are the same, the first processor 732a can not transmit the first message to the second processor 732b.

Accordingly, by minimizing cache occupancy or buffer occupancy of the same data, it is possible to reduce latency and to perform high-speed data transmission during inter-processor communication.

Meanwhile, upon first receiving the first message, the second processor 732b can store the first message in the second cache 735b, and upon subsequently receiving the first message, the second processor 732b can update the second cache 735b. Accordingly, it is possible to reduce latency and to perform high-speed data transmission during inter-processor communication.

Meanwhile, upon receiving the first message, the second processor 732b can generate a thread of the timer 737, and each time the thread terminates, the second processor 732b can transmit a value in the second cache 735b to the Ethernet processor or the Ethernet ECU 626. Accordingly, it is possible to reduce latency and to perform high-speed data transmission during inter-processor communication.

Meanwhile, during a period in which the inter-processor communication is not performed such that the first message is not received, the second processor 732b can transmit a value in the second cache 735b to the Ethernet processor or the Ethernet ECU 626.

That is, in the case in which a value of the subscribed first message is constant during the period, the cache value stored in the second processor 732b can be transmitted to the Ethernet processor 626 without the inter-processor communication.

Accordingly, it is possible to minimize the usage of the IPC buffer in the shared memory 508 which operates in FIFO mode. In addition, by maintaining the usage of the IPC buffer to a minimum, data including the first message, the second message, or the like can be transmitted rapidly through the inter-processor communication.

Meanwhile, during a period in which the inter-processor communication is performed such that the first message is received, the second processor 732b can transmit a value in the updated second cache 735b to the Ethernet processor or the Ethernet ECU 626. Accordingly, it is possible to reduce latency and to perform high-speed data transmission during inter-processor communication.

Meanwhile, during the inter-processor communication, the shared memory 508 can transmit data between the first processor 732a and the second processor 732b through a first queue PTb and a second queue PTa having a higher priority than the first queue PTb.

Particularly, even when the number of events for the inter-processor communication increases, the shared memory 508 can transmit only the data, corresponding to events allocated for the second queue PTa, through the second queue PTa. Accordingly, real-time transmission of a high priority event can be ensured during the inter-processor communication.

For example, the first PTb can be a normal priority queue, and the second queue PTa can be a high priority queue.

Specifically, the shared memory 508 can transmit most of the data through the first queue PTb during the inter-processor communication.

However, the share memory 508 can transmit only time sensitive-critical data without delay through the second queue PTa which is a higher priority queue than the first queue PTb.

For example, the time sensitive-critical data can be speed data, position information data, or the like.

That is, the shared memory 508 can transmit the speed data or position information data between the first processor 732a or the second processor 732b through the second queue PTa. Accordingly, real-time transmission of the speed data or the position information data having a high priority can be ensured during the inter-processor communication.

Meanwhile, the first processor 732a or the second processor 732b can manage a list of applications capable of using the second queue PTa.

For example, the second processor 732b can include an application for displaying speed information, as an application capable of using the second queue PTa, in a second list 738b and can manage the list.

Meanwhile, for real-time transmission through the second queue PTa, a minimum operation is preferred so that there can be no redundant scenarios or applications.

As described above, by transmitting the time sensitive-critical data in real time using the second queue PTa, real-time transmission of a high priority event can be ensured during the inter-processor communication.

Meanwhile, during the inter-processor communication, the shared memory 508 can reduce latency and can perform high-speed data transmission by assigning at least two queues.

In the drawing, an example is illustrated in which the fist manager 734a in the first processor 732a manages a first list 738a which is a whitelist, and the second manager 734b in the second processor 732b manages a second list 738b which is a whitelist, thereby ensuring the real-time transmission of a high-priority event during the inter-processor communication.

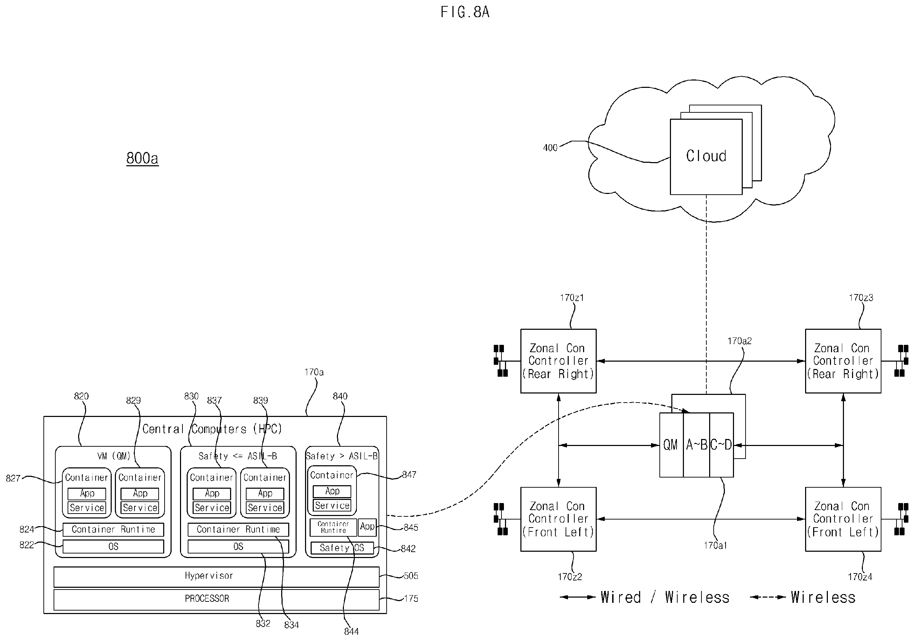

FIGS. 8A to 8D are diagrams illustrating various examples of a vehicle communication device.

FIG. 8A is a diagram illustrating an example of a vehicle communication device according to an embodiment of the present disclosure.

Referring to the drawing, a vehicle communication device 800a according to an embodiment of the present disclosure includes signal processing devices 170a1 and 170a2 and a plurality of zonal signal processing devices 170Z1 to 170Z4.

Meanwhile, two signal processing devices 170a1 and 170a2 are illustrated in the drawing, which are provided for backup and the like, and one signal processing device is also possible.

Meanwhile, the signal processing devices 170a1 and 170a2 can be referred to as a High Performance Computing (HPC) signal processing devices.

The plurality of zonal signal processing devices 170Z1 to 170Z4 can be located in the respective zones Z1 to Z4 and can transmit sensor data to the signal processing devices 170a1 and 170a2.

The signal processing devices 170a1 and 170a2 can receive data by wire from the plurality of zonal signal processing devices 170Z1 to 170Z4 or a communication device 120.

In the drawing, an example is illustrated in which the signal processing devices 170a1 and 170a2 exchange data with the plurality of zonal signal processing devices 170Z1 to 170Z4 based on wired communication, and the signal processing devices 170a1 and 170a2 exchange data with the server 400 based on wireless communication, but the communication device 120 can exchange data with the server 400 based on wireless communication, and the signal processing devices 170a1 and 170a2 can exchange data with the communication device 120 based on wired communication.

Meanwhile, the data received by the signal processing devices 170a1 and 170a2 can include camera data or sensor data.

For example, the in-vehicle sensor data can include at least one of vehicle wheel speed data, vehicle direction data, vehicle location data (global positioning system (GPS) data), vehicle angle data, vehicle speed data, vehicle acceleration data, vehicle inclination data, vehicle forward/backward movement data, battery data, fuel data, tire data, vehicle lamp data, in-vehicle temperature data, in-vehicle humidity data, external vehicle radar data, and external vehicle lidar data.

Meanwhile, the camera data can include external vehicle camera data and in-vehicle camera data.

Meanwhile, the signal processing devices 170a1 and 170a2 can execute a plurality of virtual machines 820, 830, and 840 based on safety levels.

In the drawing, an example is illustrated in which the processor 175 in the signal processing device 170a executes the hypervisor 505, and executes first to third virtual machines 820 to 840 on the hypervisor 505 according to the Automotive Safety Integrity Level (ASIL).

The first virtual machine 820 can be a virtual machine corresponding to the quality management (QM) level which is the lowest risk level of the ASIL with no mandatory need.

The first virtual machine 820 can execute an operating system 822, a container runtime 824 on the operating system 822, and containers 827 and 829 on the container runtime 824.

The second virtual machine 820 can be a virtual machine corresponding to ASIL A or ASIL B with the combination of severity, exposure, and controllability values being 7 or 8.

The second virtual machine 820 can execute an operating system 832, a container runtime 834 on the operating system 832, and containers 837 and 839 on the container runtime 834.

The third virtual machine 840 can be a virtual machine corresponding to ASIL C or ASIL D with the combination of severity, exposure, and controllability values being 9 or 10.

Meanwhile, ASIL D can correspond to a grade that requires the highest level of safety.

The third virtual machine 840 can execute a safety operating system 842 and an application 845 on the operating system 842.

Meanwhile, the third virtual machine 840 can also execute the safety operating system 842, a container runtime 844 on the safety operating system 842, and a container 847 on the container runtime 844.

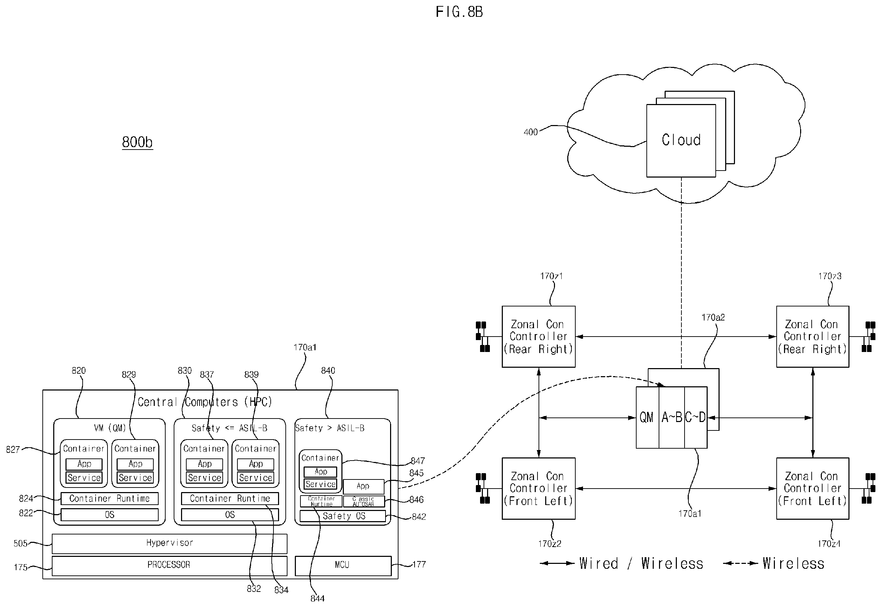

Meanwhile, unlike the drawing, the third virtual machine 840 can also be executed by a separate core, rather than by the processor 175, which will be described below with reference to FIG. 8B.

Meanwhile, the processor 175 that executes the first to third virtual machines 820 to 840 can correspond to the second processor 732b of FIG. 7.

FIG. 8B is a diagram illustrating another example of a vehicle communication device according to an embodiment of the present disclosure.

Referring to the drawing, a vehicle communication device 800b according to an embodiment of the present disclosure includes the signal processing devices 170a1 and 170a2 and the plurality of zonal signal processing devices 170Z1 to 170Z4.

The vehicle communication device 800b of FIG. 8B is similar to the vehicle communication device 800a of FIG. 8A, with a difference being that the signal processing device 170a1 of FIG. 8B is partially different from the signal processing device 170a1 of FIG. 8A.

The following description will focus on the difference, in which the signal processing device 170a can include a processor 175 and a second processor 177.

The processor 175 in the signal processing device 170a1 executes the hypervisor 505, and executes the first and second virtual machines 820 and 830 on the hypervisor 505 according to the ASIL.

The first virtual machine 820 can execute the operating system 822, the container runtime 824 on the operating system 822, and the containers 827 and 829 on the container runtime 824.

The second virtual machine 820 can execute the operating system 832, the container runtime 834 on the operating system 832, and the containers 837 and 839 on the container runtime 834.

Meanwhile, the second processor 177 in the signal processing device 170a1 can execute the third virtual machine 840.

The third virtual machine 840 can execute the safety operating system 842, an AUTOSAR 846 on the operating system 842, and an application 845 on the AUTOSAR 846. That is, unlike FIG. 8A, the third virtual machine 840 can further execute the AUTOSAR 846 on the operating system 842.

Meanwhile, similarly to FIG. 8A, the third virtual machine 840 can also execute the safety operating system 842, the container runtime 844 on the safety operating system 842, and the container 847 on the container runtime 844.

Meanwhile, unlike the first and second virtual machines 820 and 830, the third virtual machine 840 that requires a high safety level is desirably executed by the second processor 177 that is a different core or a different processor.

Meanwhile, the processor 175 that executes the first and second virtual machines 820 and 830 can correspond to the second processor 732b of FIG. 7, and the second processor 177 that executes the third virtual machine 840 can correspond to the first processor 732a of FIG. 7.

Meanwhile, in the signal processing devices 170a1 and 170a2 of FIGS. 8A and 8B, in response to abnormality in the first signal processing device 170a, the second signal processing device 170a2 can operate which is provided for backup purposes.

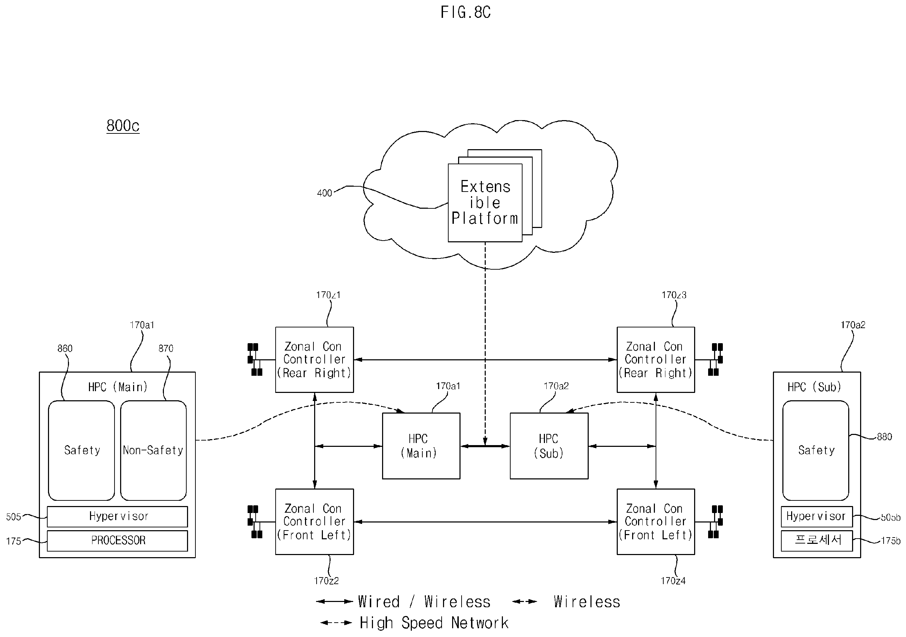

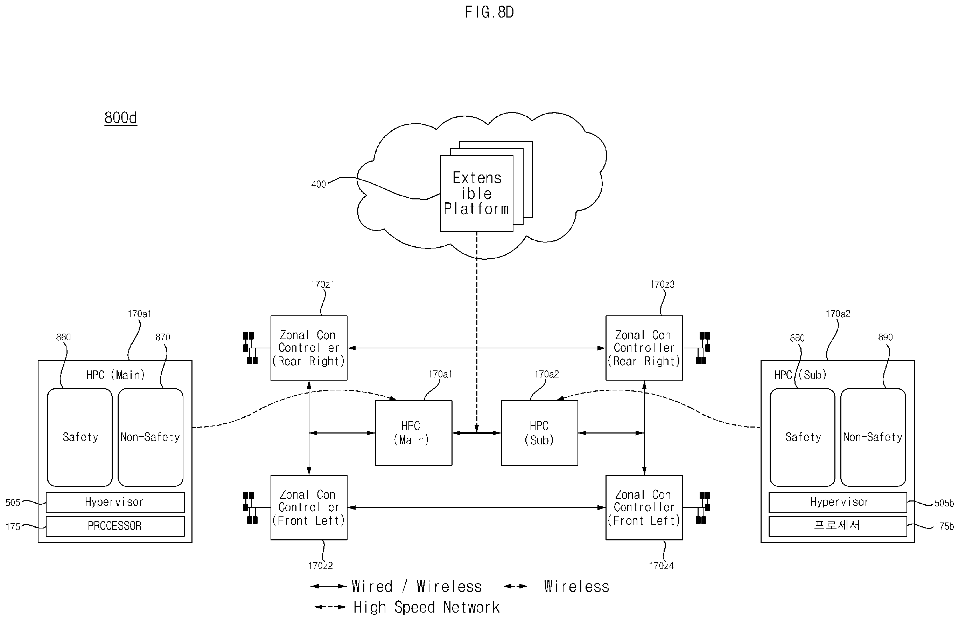

Unlike the example, the signal processing devices 170a1 and 170a2 can operate at the same time, among which the first signal processing device 170a can operate as a main device, and the second signal processing device 170a2 can operate as a sub-device, which will be described below with reference to FIGS. 8C and 8D.

FIG. 8C is a diagram illustrating yet another example of a vehicle communication device according to an embodiment of the present disclosure.

Referring to the drawing, a vehicle communication device 800c according to an embodiment of the present disclosure includes the signal processing devices 170a1 and 170a2 and the plurality of zonal signal processing devices 170Z1 to 170Z4.

Meanwhile, two signal processing devices 170a1 and 170a2 are illustrated in the drawing, which are provided for backup and the like, and one signal processing device is also possible.

Meanwhile, the signal processing devices 170a1 and 170a2 can be referred to as a High Performance Computing (HPC) signal processing devices.

The plurality of zonal signal processing devices 170Z1 to 170Z4 can be located in the respective zones Z1 to Z4 and can transmit sensor data to the signal processing devices 170a1 and 170a2.

The signal processing devices 170a1 and 170a2 can receive data by wire from the plurality of zonal signal processing devices 170Z1 to 170Z4 or a communication device 120.

In the drawing, an example is illustrated in which the signal processing devices 170a1 and 170a2 exchange data with the plurality of zonal signal processing devices 170Z1 to 170Z4 based on wired communication, and the signal processing devices 170a1 and 170a2 exchange data with the server 400 based on wireless communication, but the communication device 120 can exchange data with the server 400 based on wireless communication, and the signal processing devices 170a1 and 170a2 can exchange data with the communication device 120 based on wired communication.

Meanwhile, the data received by the signal processing devices 170a1 and 170a2 can include camera data or sensor data.

Meanwhile, the processor 175 in the first signal processing device 170a1 of the signal processing devices 170a1 and 170a2 can execute the hypervisor 505, and can execute each of a safety virtual machine 860 and a non-safety virtual machine 870 on the hypervisor 505.

Meanwhile, the processor 175b in the second signal processing device 170a2 of the signal processing devices 170a1 and 170a2 can execute the hypervisor 505b, and can execute only a safety virtual machine 880 on the hypervisor 505.

In the method, safety and non-safety virtual machines can be processed separately by the first signal processing device 170a1 and the second signal processing device 170a2, thereby improving stability and processing speed.

Meanwhile, high-speed network communication can be performed between the first signal processing device 170a1 and the second signal processing device 170a2.

FIG. 8D is a diagram illustrating yet another example of a vehicle communication device according to an embodiment of the present disclosure.

Referring to the drawing, a vehicle communication device 800d according to an embodiment of the present disclosure includes the signal processing devices 170a1 and 170a2 and the plurality of zonal signal processing devices 170Z1 to 170Z4.

The vehicle communication device 800d of FIG. 8D is similar to the vehicle communication device 800c of FIG. 8C, with a difference being that the second signal processing device 170a2 of FIG. 8D is partially different from the second signal processing device 170a2 of FIG. 8C

The processor 175b in the second signal processing device 170a2 of FIG. 8D can execute the hypervisor 505b, and can execute each of a safety virtual machine 880 and a non-safety virtual machine 890 on the hypervisor 505.

That is, unlike FIG. 8C, the processor 175b in the second signal processing device 170a2 further executes the non-safety virtual machine 890.

In the method, safety and non-safety virtual machines can be processed separately by the first signal processing device 170a1 and the second signal processing device 170a2, thereby improving stability and processing speed.

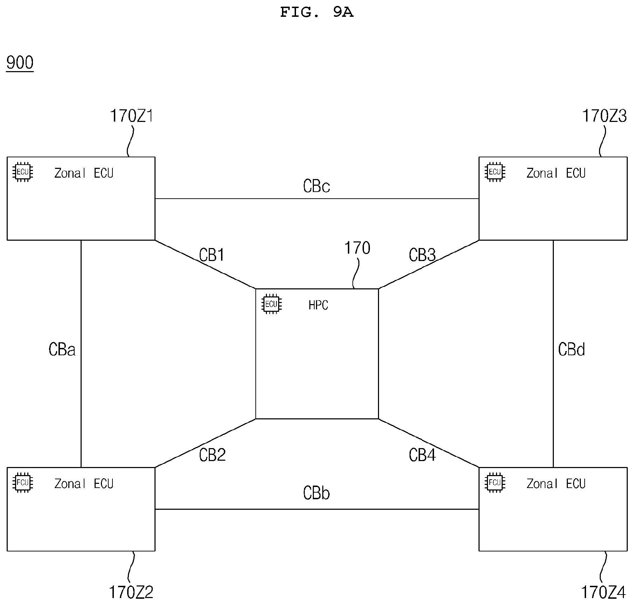

FIG. 9A is a diagram illustrating an example of a vehicle communication device according to an embodiment of the present disclosure.

Referring to FIG. 9A, a vehicle communication device 900 according to an embodiment of the present disclosure includes a plurality of zonal signal processing devices 170Z1 to 170Z4 and a signal processing device 170.

In this case, the signal processing device 170 can be referred to as a High-Performance Computing (HPC) signal processing device.

The plurality of zonal signal processing devices 170Z1 to 170Z4 and the signal processing device 170 can be connected via wired cables CB1 to CB4.

Meanwhile, the plurality of zonal signal processing devices 170Z1 to 170Z4 can be connected via wired cables CBa to CBd.

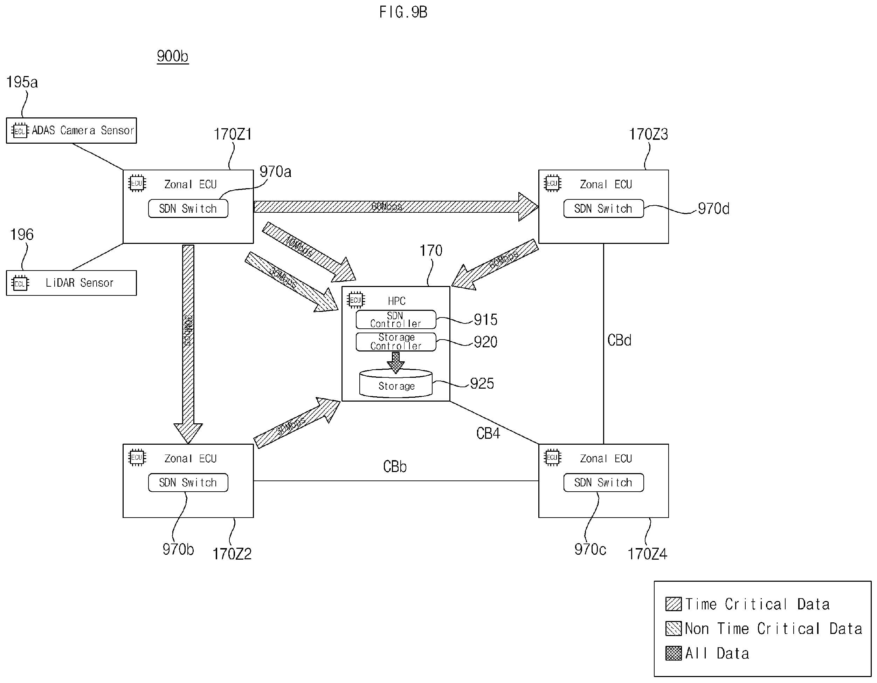

Meanwhile, the signal processing device 170 according to an embodiment of the present disclosure includes a storage device 925 (see FIG. 9B).

Meanwhile, in the case in which sensor data from at least one of the plurality of zonal signal processing devices 170Z1 to 170Z4 is transmitted to the signal processing device 170, multipath routing is desirably performed in order to prevent network bottlenecks.

Specifically, the speed of reading/writing data from/to the storage device 925 (see FIG. 9B) is faster than a network speed at which sensor data from at least one of the plurality of zonal signal processing devices 170Z1 to 170Z4 is transmitted to the signal processing device 170, such that multipath routing is desirably performed in order to prevent network bottlenecks.

To this end, the signal processing device 170 according to an embodiment of the present disclosure performs Software Defined Network (SDN)-based multipath routing, thereby ensuring a stable network environment during data read/write operations on the storage device 925.

FIG. 9B is a diagram illustrating another example of a vehicle communication device according to an embodiment of the present disclosure.

Referring to FIG. 9B, a vehicle communication device 900b according to an embodiment of the present disclosure includes a plurality of zonal signal processing devices 170Z1 to 170Z4 and a signal processing device 170.

The plurality of zonal signal processing devices 170Z1 to 170Z4 and the signal processing device 170 can be connected via wired cables CB1 to CB4.

Meanwhile, the plurality of zonal signal processing devices 170Z1 to 170Z4 can be connected via wired cables CBa to CBd.

Meanwhile, the signal processing device 170 according to an embodiment of the present disclosure includes a network controller 915 configured to control multipath routing for at least one of the plurality of zonal signal processing devices 170Z1 to 170Z4, and a storage device 925 configured to store data received through the multipath routing.

The signal processing device 170 according to an embodiment of the present disclosure can further include a storage device controller 920 configured to control the storage device 925.

The speed of reading/writing data from/to the storage device 925 is faster than a network speed at which sensor data from at least one of the plurality of zonal signal processing devices 170Z1 to 170Z4 is transmitted to the signal processing device 170, such that multipath routing is desirably performed in order to prevent network bottlenecks.

Meanwhile, the network controller 915 controls a portion of the sensor data from a first zonal signal processing device 170Z1 among the plurality of zonal signal processing devices 170Z1 to 170Z4 to be received from the first zonal signal processing device 170Z1, and controls another portion of the sensor data to be received directly or via at least one of the plurality of zonal signal processing devices 170Z1 to 170Z4, other than the first zonal signal processing device 170Z1.

Accordingly, it is possible to ensure a stable network environment during data read/write operations on the storage device 925. Further, data can be transmitted to the storage device 925 by using multiple paths. Meanwhile, data can be transmitted by dynamically changing a network configuration.

In this case, the sensor data can include at least one of camera data, lidar data, radar data, vehicle direction data, vehicle position data (global positioning system (GPS) data), vehicle angle data, vehicle speed data, vehicle acceleration data, vehicle inclination data, vehicle forward/backward movement data, battery data, fuel data, tire data, vehicle lamp data, vehicle internal temperature data, and vehicle internal humidity data

In the drawing, an example is illustrated in which camera data from a camera 195a and lidar data from the lidar sensor 196 are input to a first zonal signal processing device 170Z1, and the camera data and the lidar data are transmitted to the signal processing device 170 via a second zonal signal processing device 170Z2 and a third zonal signal processing device 170Z3, and the like.

Meanwhile, the network controller 915 can control data, other than time-critical data, among the sensor data from the first zonal signal processing device 170Z1 to be directly received from the first zonal signal processing device 170Z1.

In the drawing, an example is illustrated in which non-time-critical data, other than the time-critical data, among the sensor data from the first zonal signal processing device 170Z1 is directly transmitted from the first zonal signal processing device 170Z1 to the signal processing device 170.

Meanwhile, the network controller 915 can be configured to receive the time-critical data, among the sensor data from the first zonal signal processing device 170Z1, directly or via at least one of the plurality of zonal signal processing devices 170Z1 to 170Z4 other than the first zonal signal processing device 170Z1.

In the drawing, an example is illustrated in which a portion of the time-critical data, among the sensor data from the first zonal signal processing device 170Z1, is transmitted to the signal processing device 170 via the second signal processing device 170Z2, and another portion of the time-critical data, among the sensor data from the first zonal signal processing device 170Z1, is transmitted to the signal processing device 170 via the third signal processing device 170Z3, and yet another portion of the sensor data is transmitted directly to the signal processing device 170a

In this case, the network controller 915 can set the speed or bandwidth of a network on a path, through which data is transmitted via at least one of the plurality of zonal signal processing devices 170Z1 to 170Z4 other than the first zonal signal processing device 170Z1, to be greater than the speed or bandwidth of a network on a path through which data is transmitted directly to the signal processing device 170.

Accordingly, it is possible to ensure a stable network environment during data read/write operations on the storage device 925. Further, data can be transmitted to the storage device 925 using multiple paths.

Meanwhile, the storage device controller 920 can be configured to store both of the time-critical data, received through the network controller 915, and the non-time-critical data, other than the time-critical data, in the storage device 925.

Meanwhile, the network controller 915 can monitor a network topology with the plurality of zonal signal processing devices 170Z1 to 170Z4, and can distribute bandwidth and set a path for multipath routing based on the monitoring.

Meanwhile, when setting a path for the multipath routing, the network controller 915 can set a bandwidth based on a path capacity.

Meanwhile, the network controller 915 can perform the multipath routing based on a Software Defined Network (SDN).

Meanwhile, the network controller 915 does not perform re-search for a path during the multipath routing. Accordingly, it is possible to ensure a stable network environment during data read/write operations on the storage device 925.

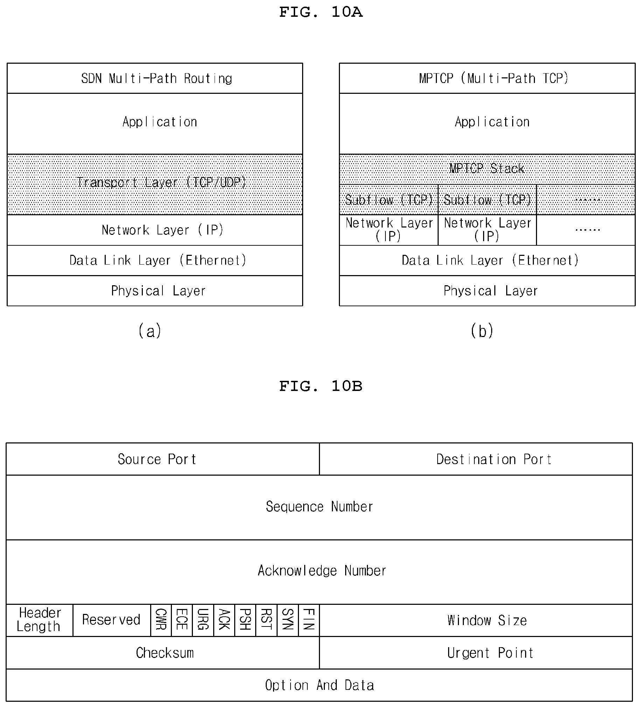

FIGS. 10A to 17 are diagrams referred to in the description of operation FIG. 9A or FIG. 9B.

FIG. 10A is a diagram illustrating SDN Multipath Routing and Multipath TCP (MPTCP)

Referring to FIG. 10A, the SDN Multipath Routing includes a Physical Layer, a Data Link Layer (Ethernet), a Network Layer (IP), a Transport Layer (TCP/UDP), and an Application.

Meanwhile, the Multipath TCP (MPTCP) includes a Physical Layer, a Data Link Layer (Ethernet), a Network Layer (IP), a Subflow (TCP), an MPTCP Stack, and an Application.

Both the SDN Multipath Routing and the Multipath TCP (MPTCP) can use existing network protocols.

Meanwhile, the MPTCP requires an operation, such as authentication key exchange for combining multiple paths (subflows) into a single network, etc., such that an additional protocol stack is used therein.

Meanwhile, as the number of protocol stacks increases, the end-to-end data transmission speed decreases. Accordingly, the MPTCP repeats operations, such as resetting subflows, when re-searching for a path.

FIG. 10B is a diagram illustrating an example of TCP Protocol Header structure.

Referring to FIG. 10B, the TCP is a connection-oriented protocol that prevents data loss and guarantees the transmission order of data.

Accordingly, the TCP guarantees the transmission order by exchanging Sequence Number and Acknowledge Number, as illustrated herein.

As a result, if a lower priority packet arrives first, a delay occurs until a higher priority packet arrives, and the transmission order is guaranteed.

Meanwhile, the MPTCP has a drawback in that when a delay occurs in one path during transmission through multiple paths, the delay occurs to guarantee the transmission order of all the other paths.

Meanwhile, in the case of the delay or congestion control, the MPTCP can perform network congestion control by changing a window size which is a size of data that can be transmitted or received at one time by TCP Protocol.

However, if data is not transmitted smoothly even by performing the congestion control, the MPTCP can perform Subflow (TCP) Session connection after re-searching for a path, and can perform the process of starting data transmission.

As a result, due to the latency of the MPTCP that occurs in all these processes, it is difficult to apply the MPTCP to the vehicle signal processing device 170.

Meanwhile, in the case of the delay or congestion control, the MPTCP can perform network congestion control by changing a window size which is a size of data that can be transmitted or received at one time by TCP Protocol.

However, if data is not transmitted smoothly even by performing the congestion control, the MPTCP can perform Subflow (TCP) Session connection after re-searching for a path, and can perform the process of starting data transmission.

As a result, due to the latency of the MPTCP that occurs in all these processes, it is difficult to apply the MPTCP to the vehicle signal processing device 170.

Meanwhile, in the case in which the storage device 925 uses a sixteen-lane (x16) PCIe, the transmission speed can be about 1024 Gbps, and in the case in which the storage device 25 uses a four-lane (x4) PCIe, the transmission speed can be about 256 Gbps.

However, a distance for using the lane as a physical connection is limited in the PCIe, such that it is desirable to use Ethernet for the end-to-end communication.

Accordingly, there can be a difference between Ethernet speed and the speed of data read/write on a storage device.

Meanwhile, in the case where sensor fusion is performed based on a large volume of camera data, lidar data, and radar data, the large volume of data is transmitted to the storage device 925 and stored therein.

Accordingly, the present disclosure adopts SDN Multipath Routing that enables simultaneous transmission through multiple paths.

In the SDN Multipath Routing, the network controller 915 can monitor in real time the in-vehicle network topology and status, and can set a path by securing bandwidth required for data transmission based on the real-time monitoring.

Accordingly, in the SDN Multipath Routing, congestion control, such as network bottlenecks and the like, does not occur, and re-searching for a path is not performed.

Meanwhile, in the SDN Multipath Routing, transmission delay for one packet, which is the time taken for one packet to reach destination or endpoint through multiple paths, can be lower than transmission through a single path, but transmission delay for all data packets can be higher.

Meanwhile, the storage device controller 920 can transmit a request for allocating network resources to the network controller 915, and can perform data read/write operations on the storage device 925 after transmitting the allocation request.

Meanwhile, the network controller 915 can receive a request protocol for securing network resources.

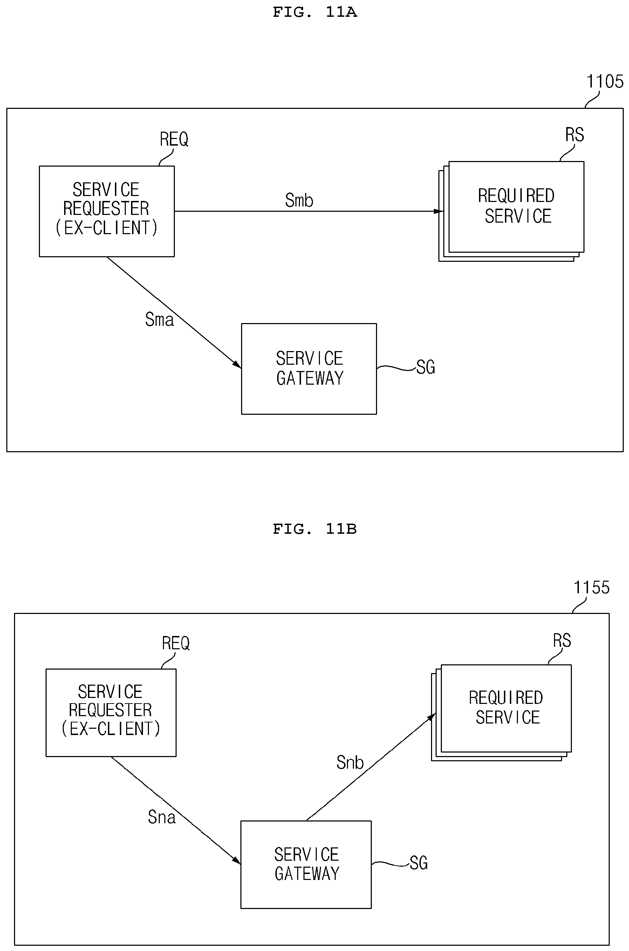

FIGS. 11A and 11B are diagrams referred to in the description of a vehicle communication device associated with the present disclosure.

FIG. 11A is a diagram illustrating an example of a service discovery.

Referring to FIG. 11A, a service requester REQ sends a service location request to a service gateway SG (Sma), and sends a service processing request to a required service RS (Smb).

FIG. 11B is a diagram illustrating an example of a service discovery.

Referring to FIG. 11B, a service requester REQ sends a service location request to a service gateway SG (Sna), and the service gateway SG mediates service processing to a required service RS (Snb).

The service discovery in FIGS. 11A and 11B is essential, particularly in a cloud. Particularly, the service discovery is essential for a structure in which many cloud-based services (sw process) are combined to provide services with the same purpose.

However, there is a drawback in that such service discovery causes unnecessary network traffic.

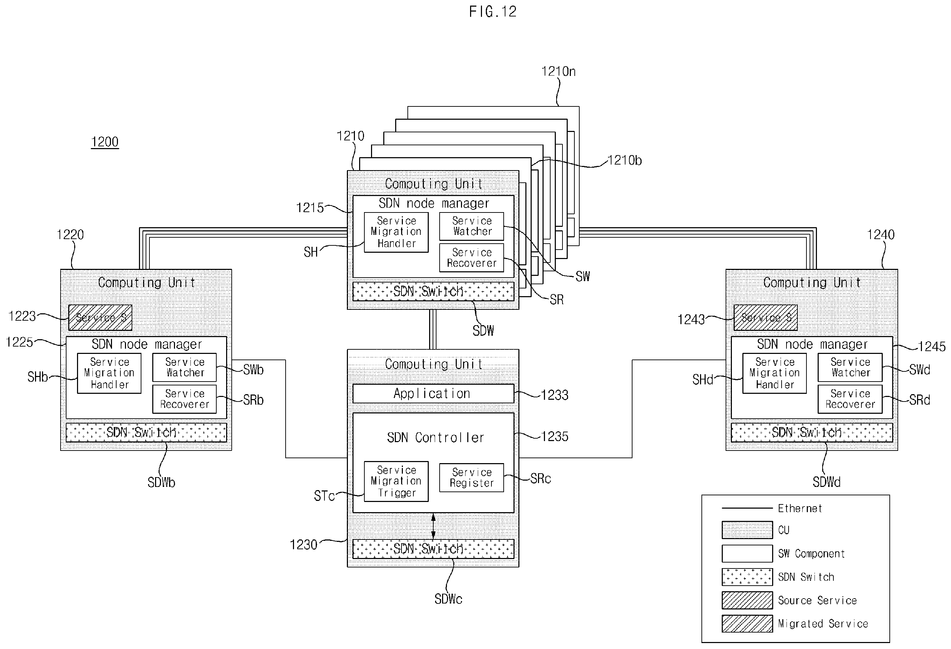

Accordingly, the present disclosure proposes a method of efficiently executing or managing services, which will be described below with reference to FIG. 12 and subsequent figures.

FIG. 12 is a diagram illustrating a vehicle communication device according to an embodiment of the present disclosure.

Referring to FIG. 12, a vehicle communication device 1200 according to an embodiment of the present disclosure includes a signal processing device 1230 and a plurality of zonal signal processing devices 1210, 1220, and 1240.

The signal processing device 1230 includes a network controller 1235 configured to control multipath routing for at least one of the plurality of zonal signal processing devices 1210, 1220, and 1240, and a network switch SDWc configured to perform network switching.

Meanwhile, the network controller 1235 can be configured to migrate a first service 1243 executed in a first zonal signal processing device 1240 among the plurality of zonal signal processing devices 1210, 1220, and 1240, and to execute a second service 1223 corresponding to the first service 1243 in a second zonal signal processing device 1220.

Accordingly, services can be efficiently executed or managed. Further, services can be dynamically executed or managed. In addition, services can be dynamically executed or managed in another zone even during service update or upgrade. Moreover, services can be migrated and executed based on multipath routing.

Meanwhile, a service can include an application or a plurality of microservices that make up an application, and the like.

For example, a service can be a driver monitoring system (DMS) application, or a face detection microservice, an eye movement microservice, an eye tracking microservice, or a warning microservice for the DMS application.

Meanwhile, the network controller 1235 can be configured to migrate the DMS application executed in the first zonal signal processing device 1240, and to execute the DMS application in the second zonal signal processing device 1220.

Meanwhile, the network controller 1235 can be configured to migrate at least one of the face detection microservice, the eye movement microservice, the eye tracking microservice, or the warning microservice in the DMS application executed in the first zonal signal processing device 1240, and to execute at least one of the microservices in the second zonal signal processing device 1220.

Accordingly, services can be efficiently executed or managed. Further, services can be dynamically executed or managed.

Meanwhile, in order to execute the second service 1223, the network controller 1235 can select at least one of the plurality of zonal signal processing devices 1210, 1220, and 1240, and can be configured to execute the second service 1223 in the selected second zonal signal processing device 1220. Accordingly, services can be efficiently executed or managed. Particularly, services can be migrated and executed based on multipath routing.

Meanwhile, in response to network usage of the first service 1243 increasing to the maximum during a reference time period or more while executing a plurality of services, the network controller 1235 can determine to migrate the first service 1243. Accordingly, services can be efficiently executed or managed.

Meanwhile, in order to migrate the first service 1243, the network controller 1235 can select the second zonal signal processing device 1220 based on network availability, the number of network connections, or the number of network paths.

For example, the network controller 1235 can select the second zonal signal processing device 1220 in the case in which the second zonal signal processing device 1220 has a highest network availability, a largest number of network connections, a largest number of network paths, or a largest number of network connections with other services using the first service 1243. Accordingly, services can be efficiently executed or managed.

Meanwhile, if a zonal signal processing device is added, the network controller 1235 can be configured to recognize the added zonal signal processing device based on network usage of the added zonal signal processing device, and if service migration is required, the network controller 1235 can be configured to determine whether the first service 1243 is executable in the added zonal signal processing device, and then can be configured to execute a corresponding service in the added zonal signal processing device.

For example, if a zonal signal processing device is newly connected to a network in addition to the plurality of zonal signal processing devices 1210, 1220, and 1240 of FIG. 12, the network controller 1235 can detect network usage of the added zonal signal processing device.

Further, the network controller 1235 can recognize the added zonal signal processing device based on the network usage of the added zonal signal processing device, and if migration of the first service 1243 is required, the network controller 1235 can be configured to migrate execute a service corresponding to the first service 1243 in the added zonal signal processing device. Accordingly, services can be efficiently executed or managed.

Meanwhile, the network controller 1235 can store an execution location of the second service 1223 or can set or reset a networking path for the execution location of the second service 1223.

Meanwhile, upon determining to migrate the service to the second zonal signal processing device 1220, the network controller 1235 can store the execution location of the second service 1223 in the signal processing device 170.

Then, the network controller 1235 can set or reset a network path related to the execution location of the second service 1223.

For example, if a network status is a first level during transmission of data related to the first service 1243 executed in the first zonal signal processing device 1240, the network controller 1235 can transmit the data via a third zonal signal processing device 1210 from the first zonal signal processing device 1240 to the second zonal signal processing device 1220 in order to execute the second service 1223.

In another example, if a network status is a second level during transmission of data related to the first service 1243 executed in the first zonal signal processing device 1240, the network controller 1235 can transmit the data via the central signal processing device 170, instead of the third zonal signal processing device 1210, from the first zonal signal processing device 1240 to the second zonal signal processing device 1220 in order to execute the second service 1223.

Specifically, if the network status is the first level, the network controller 1235 can set a path for transmitting data via the third zonal signal processing device 1210, and then if the network status is changed from the first level to the second level, the network controller 1235 can reset a path for transmitting data via the central signal processing device 170 instead of the third zonal signal processing device 1210. Accordingly, services can be efficiently executed or managed.

Meanwhile, unlike the drawing, the network controller 1235 can be configured to migrate the service executed in the central signal processing device 170.

For example, the network controller 1235 can be configured to migrate a third service executed in the central signal processing device 170, and to execute a fourth service corresponding to the third service in at least one of the plurality of zonal signal processing devices 1210, 1220, and 1240. Accordingly, services can be efficiently executed or managed.

Meanwhile, the network controller 1235 can make an inquiry about the service migration to at least one of the plurality of zonal signal processing devices 1210, 1220, and 1240, and in response to receiving a service migration request from the first zonal signal processing device 1240, the network controller 1235 can determine a migration location of the corresponding service and can transmit a request for executing the service to the second zonal signal processing device 1220 corresponding to the determined location. Accordingly, services can be efficiently executed or managed.

Meanwhile, the network controller 1235 can transmit the request for executing the service to the zonal signal processing device corresponding to the determined location, and after execution of the service requested by the zonal signal processing device is started, the network controller 1235 can transmit a request for terminating the service to the zonal signal processing device that has transmitted the service migration request.

For example, the network controller 1235 can transmit a request for executing the second service 1223, corresponding to the first service 1243, to the second zonal signal processing device 1220, and in response to receiving a service migration request from the second zonal signal processing device 1220, the network controller 1235 can transmit a request for terminating the first service 1243 to the first zonal signal processing device 1240. Accordingly, services can be efficiently executed or managed.

Meanwhile, upon receiving execution information of the second service 1223 from the second zonal signal processing device 1220, the network controller 1235 can update the execution information of the second service 1223 in a service registry. Accordingly, services can be efficiently executed or managed.

In another example, upon receiving a response that service migration is possible from the second zonal signal processing device 1220, the network controller 1235 can be configured to control the second zonal signal processing device 1220 to execute the second service 1223.

In response thereto, the second zonal signal processing device 1220 can execute the second service 1223 and can transmit an execution result to the network controller 1235.

Further, upon receiving the execution result from the second zonal signal processing device 1220, the network controller 1235 can transmit a request for terminating the first service 1243 to the first zonal signal processing device 1240. Accordingly, services can be efficiently executed or managed.

Meanwhile, the signal processing device 170 according to an embodiment of the present disclosure can include the processor 175 (see FIG. 8A) including the network controller 1235 and the network switch SDWc.

Meanwhile, as illustrated in FIG. 8A, the processor 175 can execute at least one operating system on the hypervisor 505 and execute the plurality of virtual machines 820 to 840 on the operating system.

FIG. 8A illustrates an example in which a safety operating system 842, a first operating system 832, and a second operating system 822 are executed on the hypervisor 505.

Meanwhile, among the plurality of virtual machines 820 to 840, a first virtual machine 840 is a virtual machine with a higher safety level than ASIL B, a second virtual machine 830 is a virtual machine with a safety level lower than or equal to ASIL B, and a third virtual machine 820 is a virtual machine with a lowest safety level of QM.

For example, the first virtual machine 840 is a virtual machine with the highest safety level of ASIL D, the second virtual machine 830 is a virtual machine with a safety level of ASIL B, and the third virtual machine 820 is a virtual machine with the lowest safety level of QM.

Meanwhile, the network controller 1235 can be configured to migrate a fifth service executed on the operating system of the processor 175 in the signal processing device 170, and to execute a sixth service corresponding to the fifth service on the operating system of any one of the plurality of zonal signal processing devices 1210, 1220, and 1240.

For example, the network controller 1235 can be configured to migrate the fifth service executed on the first operating system 832, and to execute the sixth service corresponding to the fifth service on the operating system of any one of the plurality of zonal signal processing devices 1210, 1220, and 1240. Accordingly, services can be efficiently executed or managed.

Meanwhile, the network controller 1235 can be configured to migrate a seventh service executed on any one operating system on the hypervisor 505, and to execute control an eighth service corresponding to the seventh service on another operating system on the hypervisor 505.

For example, the network controller 1235 can be configured to migrate the seventh service executed on the safety operating system 842 on the hypervisor 505, and to execute the eighth service corresponding to the seventh service on the first operating system 832 or the second operating system 822 which is another operating system on the hypervisor 505.

In another example, the network controller 1235 can be configured to migrate the seventh service executed on the first operating system 832 on the hypervisor 505, and to execute the eighth service corresponding to the seventh service on the second operating system 822 which is another operating system on the hypervisor 505.

Meanwhile, the network controller 1235 can be configured to migrate a ninth service executed on the first virtual machine 840 among the plurality of virtual machines 820 to 840, and to execute a tenth service corresponding to the ninth service on the second virtual machine 830 among the plurality of virtual machines 820 to 840. Accordingly, services can be efficiently executed or managed.

Meanwhile, during service migration, the network controller 1235 can migrate the service to the signal processing device or a virtual machine with the same or lower safety level, or the like.

For example, the network controller 1235 can be configured to migrate a service, executed on the first virtual machine 840 corresponding to the highest safety level of ASIL D on the hypervisor 505, to the second virtual machine 830 with the safety level of ASIL B or the third virtual machine 820 with the lowest safety level of QM and executed therein. Accordingly, services can be efficiently executed or managed based on the safety level.

In another example, the network controller 1235 can be configured to migrate the first service 1243, executed in the first zonal signal processing device 1240 corresponding to ASIL B, and to execute the second service 1223 the second zonal signal processing device 1220 corresponding to ASIL B or QM. Accordingly, services can be efficiently executed or managed based on the safety level.

Meanwhile, during service migration, the network controller 1235 can migrate the service into the processor or the signal processing device in which a container engine is executed.

Particularly, the network controller 1235 can rearrange a service on a container basis.

For example, the network controller 1235 can be configured to migrate the first service 1243, executed on the first operating system, to the second operating system, which is another operating system, and reexecuted therein, or can be configured to migrate the first service 1243 to another virtual machine or another container in the same operating system and reexecuted therein, or can be configured to migrate the first service 1243, executed on the first virtual machine, to another virtual machine or another container and reexecuted therein. Accordingly, services can be efficiently executed or managed.

In another example, the network controller 1235 can rearrange the service between a first container and a second container, or between the first container and the virtual machine, or between the first container and the operating system on the hypervisor 505, or between the virtual machine and the operating system on the hypervisor 505. Accordingly, services can be efficiently executed or managed.

Meanwhile, the signal processing device 1230 can further include or execute an application 1233.

Meanwhile, the network controller 1235 in the signal processing device 1230 can execute or include a service migration trigger STc for service migration, and a service register SRc for storing service information and the like.

Meanwhile, the first zonal signal processing device 1240 includes a network node manager 1245 and a network switch SDWd for performing network switching.

Meanwhile, the network controller 1235 can transmit a command for changing or managing a network node to the respective network node managers 1215, 1225, and 1245.

Accordingly, the respective network node managers 1215, 1225, and 1245 can change or manage the network node for multipath routing according to a command from the network controller 1235.

Particularly, the network node manager 1245 in the first zonal signal processing device 1240 can change or mange the network node for multipath routing according to the command from the network controller 1235.

Meanwhile, the network node manager 1245 can include or execute a service migration handler SHd for requesting service migration and execution, a service watcher SWd for checking a service status, and a service recoverer SRd for requesting service reexecution processing.

Meanwhile, the second zonal signal processing device 1220 includes a network node manager 1225 and a network switch SDWb for performing network switching.

Meanwhile, the network node manager 1225 in the second zonal signal processing device 1220 can change or mange the network node for multipath routing according to the command from the network controller 1235.

Meanwhile, the network node manager 1225 in the second zonal signal processing device 1220 executes or terminates a corresponding service based on receiving a service execution request. Accordingly, services can be efficiently executed or managed. Further, services can be dynamically executed or managed. Moreover, services can be migrated and executed based on multipath routing.

Meanwhile, upon executing the service, the network node manager 1225 can transmit execution information of the service to the outside, for example, to the signal processing device 1230.

Meanwhile, the network node manager 1225 can include or execute a service migration handler SHb for requesting service migration and execution, a service watcher SWb for checking a service status, and a service recoverer SRb for requesting service reexecution processing.

Meanwhile, the third zonal signal processing device 1210 includes a network node manager 1215 and a network switch SDW for performing network switching.

Meanwhile, the network node manager 1215 in the third zonal signal processing device 1210 can change or mange the network node for multipath routing according to the command from the network controller 1235.

Meanwhile, the network node manager 1215 can include or execute a service migration handler SH for requesting service migration and execution, a service watcher SW for checking a service status, and a service recoverer SR for requesting service reexecution processing.

Meanwhile, the network node managers 1215, 1225, and 1245 can distribute binary in advance to the signal processing device or all nodes on which services are executable.

Specifically, the network node managers 1215, 1225, and 1245 can distribute, copy, or move binary at the time of execution or reexecution of a service.

Alternatively, the network node managers 1215, 1225, and 1245 can distribute, copy, or move binary even when a service is not executed.

Meanwhile, the network node managers 1215, 1225, and 1245 can control the network controller 1235 to change or update a configuration file at the time of initial execution or reexecution of a service.

Meanwhile, the plurality of zonal signal processing devices 1210, 1220, and 1240 and the signal processing device 1230 can each perform Ethernet communication.

Meanwhile, each computing unit of FIG. 12 can be a signal processing device, but is not limited thereto, and can be each processor in the signal processing device or each virtual machine or container in the processor.

Meanwhile, the network controller 1235 can store, in a database, information required for migrating a service that can be migrated.

For example, the network controller 1235 can store the location of a signal processing device on which a service is executable, or executable hardware information, e.g., information about the processor, memory, network configuration, etc., in a database.

Meanwhile, the network controller 1235 can determine whether to migrate a service based on a service migration triggering condition.

Meanwhile, in the case in which a signal processing device is physically added or changed, the network controller 1235 can store information required for migration, among information about the added or changed signal processing device, in a settings database.

Meanwhile, in the case in which the added or changed signal processing device operates and uses a vehicle network, the network controller 1235 can recognize the added or changed signal processing device.

Meanwhile, when service migration is required, the network controller 1235 can also select the added or changed signal processing device as a migration target.

Meanwhile, in the case in which there are a plurality of services to be migrated, the network controller 1235 can select, as a service to be migrated, a service having a smaller number of network paths connected to the service to be migrated.

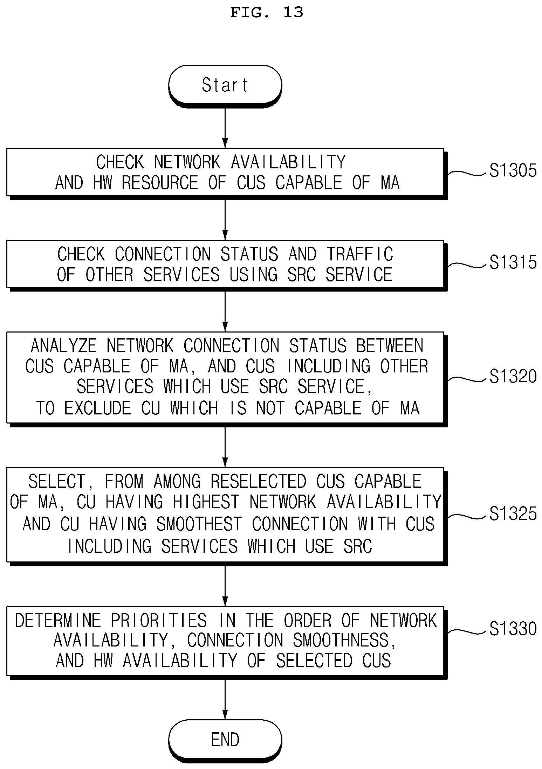

Meanwhile, in the case in which there are a plurality of service migration validities, the network controller 1235 can select the destination of a service to be migrated, which will be described below with reference to FIG. 13 and subsequent figures.

FIG. 13 is a flowchart illustrating an example of operation of a signal processing device according to an embodiment of the present disclosure.

Referring to FIG. 13, the network controller 1235 can check migration availability and hardware resources of a signal processing device capable of migrating a service (S1315).

For example, when migrating the first service 1243 of FIG. 12, the network controller 1235 can check migration availability and hardware resources of the plurality of zonal signal processing devices 1210 and 1240 or the signal processing device 1230.

In this case, the hardware resources can include information about the processor, memory, network configuration, and the like.

Meanwhile, the network controller 1235 can check connection status and traffic of other services using a source service to be migrated (S1315).

For example, the network controller 1235 can check connection status and traffic of other services using the first service 1243 to be migrated.

Then, by analyzing network connection status between the signal processing devices 1210 and 1240 capable of migrating a service, and signal processing devices including other services which use the first service 1243 which is a source service, the network controller 1235 can exclude a signal processing device which is not capable of migrating a service (S1320).

For example, in the case in which a network connection status between the first zonal signal processing device 1240 and the third zonal signal processing device 1210 is less than or equal to a reference value, the network controller 1235 can exclude the third zonal signal processing device 1210.

Accordingly, the second zonal signal processing device 1220 and the signal processing device 1230 can be selected.

Meanwhile, the network controller 1235 can select, from among the signal processing devices selected in operation 1320 (S1320), a signal processing device having a highest network availability and a signal processing device having a smoothest connection with signal processing devices including the services which use the source service (S1325).

For example, of the second zonal signal processing device 1220 and the signal processing device 1230 which are selected in operation 1320 (S1320), the network controller 1235 can select the second zonal signal processing device 1220 having the highest network availability.

In another example, of the second zonal signal processing device 1220 and the signal processing device 1230 which are selected in operation 1320 (S1320), the network controller 1235 can select the second zonal signal processing device 1220 having the smoothest connection with the first service 1243 to be migrated.

Then, the network controller 1235 can select a signal processing device from among the selected signal processing devices, based on priorities in the order of network availability, connection smoothness, and hardware availability (S1330).

For example, of the second zonal signal processing device 1220 and the signal processing device 1230, the network controller 1235 can select the second zonal signal processing device 1220 having the highest network availability.

In another example, in the case in which the second zonal signal processing device 1220 and the signal processing device 1230 have almost the same network availability, the network controller 1235 can select the second zonal signal processing device 1220 having higher network smoothness.

In yet another example, in the case in which the second zonal signal processing device 1220 and the signal processing device 1230 have almost the same network availability and network smoothness, the network controller 1235 can select the second zonal signal processing device 1220 having higher hardware (e.g., processor or memory) availability. Accordingly, the second zonal signal processing device 1220 can stably execute a second service.

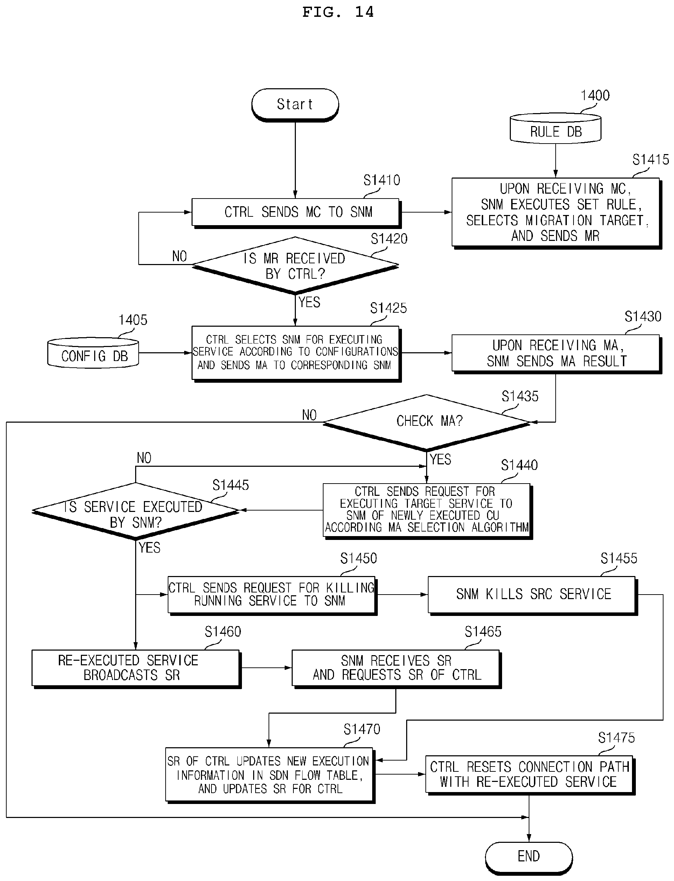

FIG. 14 is a flowchart illustrating an example of operation of a vehicle communication device according to an embodiment of the present disclosure.

Referring to FIG. 14, the network controller 1235 can transmit a service migration check to the network node managers 1215, 1225, and 1245 in the respective signal processing devices 1210, 1220, and 1240 (S1410).

In response thereto, the network node managers 1215, 1225, and 1245 in the respective signal processing devices 1210, 1220, and 1240 can receive the service migration check, can select a migration target according to rules set in a database 1400, and can transmit a migration response (S1415).

For example, the network node manager 1245 in the first zonal signal processing device 1240 can transmit a migration response to the network controller 1235.

In response thereto, upon receiving the migration response (S1420), the network controller 1235 can select a network node manager for executing a service according to configurations stored in a configuration database 1405, and can transmit migration availability to the selected network node manager (S1425).

For example, the network controller 1235 can select the network node manager 1225 of the second zonal signal processing device 1220, and can transmit migration availability.

Meanwhile, upon receiving the migration availability, the network node manager can transmit result data (S1430).

Meanwhile, upon receiving the result data (S1435), the network controller 1235 can transmit a request for executing a target service to a network node manager of a newly executed signal processing device according to a migration availability selection algorithm (1440).

For example, the network controller 1235 can transmit a request for executing a second service 1223, corresponding to the first service 1243, to the network node manager 1225 of the second zonal signal processing device 1220.

Meanwhile, upon confirming that the second zonal signal processing device 1220 executes the second service 1223, the network controller 1235 can transmit a request for terminating the running first service 1223 to the first zonal signal processing device 1240 (S1450).

In response thereto, the first zonal signal processing device 1240 can terminate the execution of the first service 1243 (S1455).

In response thereto, the network controller 1235 can receive and check a termination result.

Meanwhile, the second service 1223 executed by the second zonal signal processing device 1220 can transmit a service registry (S1460), and the network node manager 1225 in the second zonal signal processing device 1220 can receive the service registry and transmit the service registry to the network controller 1235 (S1465)

In response thereto, the network controller 1235 can receive and update the service registry.

In response thereto, the network controller 1235 can update the information in a flow table and transmit the information to the network.

Meanwhile, the respective network node managers 1215, 1225, and 1245 can update the changed network information.

As described above, the second service 1223 is executed during execution of the first service 1243, and the first service 1243 is terminated after a network path for using the services is changed from the first service 1243 to the second service 1223, thereby seamlessly executing or performing services during service migration, and efficiently executing or managing the services.

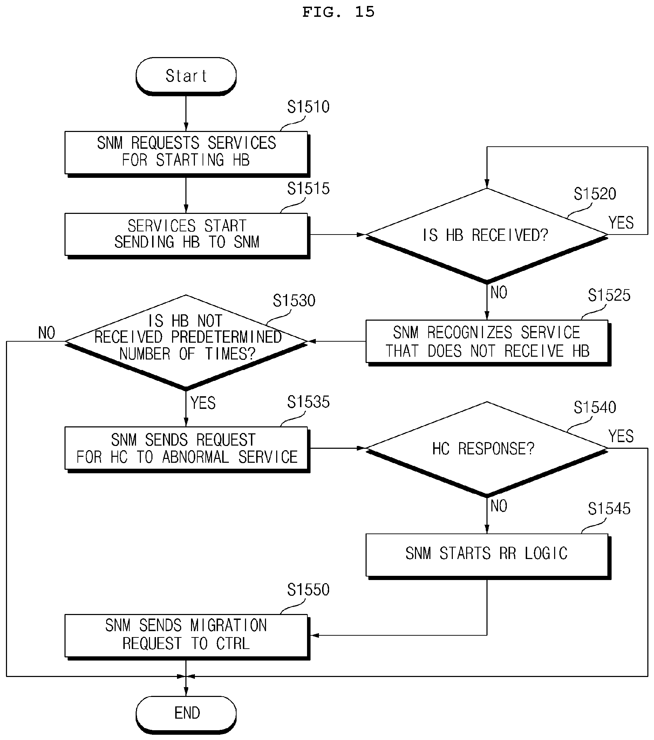

FIG. 15 is a flowchart illustrating another example of operation of a signal processing device according to an embodiment of the present disclosure.

Referring to FIG. 15, the network node managers 1215, 1225, and 1245 can request services to initiate heartbeat (S1510).

Then, the services can transmit periodic heartbeat to the network node managers 1215, 1225, and 1245 (S1515).

In response to not receiving the heartbeat, the network node managers 1215, 1225, and 1245 can determine that a problem or abnormality occurs in the service (S1525)

Meanwhile, the network node managers 1215, 1225, and 1245 can determine whether the number of times the heartbeat is not received is greater than or equal to a predetermined number of times (S1530), and if so, the network node managers 1215, 1225, and 1245 can request a service status check (S1535).

Upon receiving no response to the service status check, the network node managers 1215, 1225, and 1245 can initiate a recovery request (S1545), and can transmit a service migration request to the network controller 1235 (S1550).

In response thereto, upon receiving the service migration request, the network controller 1235 can determine a migration location of the corresponding service, and can transmit a request for executing the service to a signal processing device corresponding to the determined location.

For example, upon receiving the service migration request from the first zonal signal processing device 1240, the network controller 1235 can determine a migration location of the service, and can transmit a request for executing the service to the second zonal signal processing device 1220 corresponding to the determined location. Accordingly, services can be efficiently executed or managed.

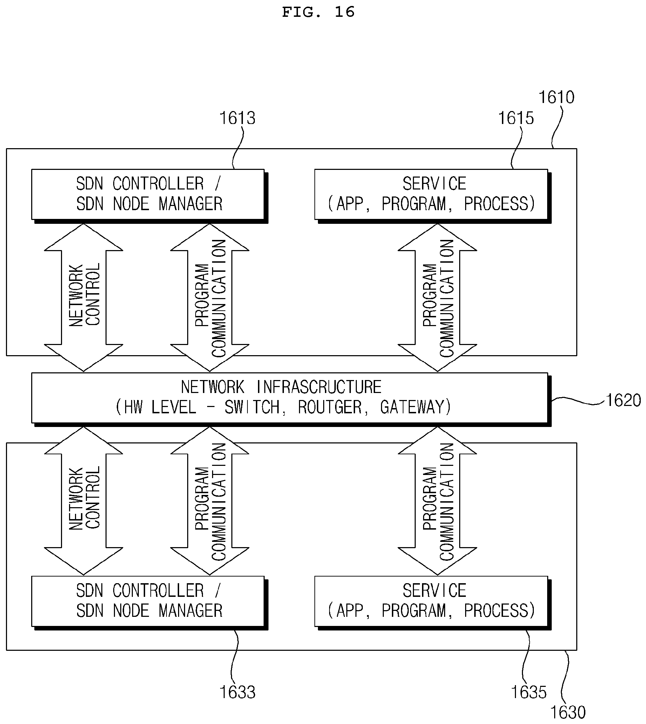

FIG. 16 is a diagram referred to in the description of a vehicle communication device according to an embodiment of the present disclosure.

Referring to FIG. 16, a network controller or a network node manager 1613 in a first signal processing device 1610 in the vehicle communication device according to an embodiment of the present disclosure can transmit a network control protocol and a program communication protocol through a network 1620.

Meanwhile, a service executed in the first signal processing device 1610 can execute only the program communication protocol.

Meanwhile, a network controller or a network node manager 1633 in a second signal processing device 1630 in the vehicle communication device according to an embodiment of the present disclosure can transmit a network control protocol and a program communication protocol through the network 1620.

Meanwhile, a service executed in the second signal processing device 1630 can execute only the program communication protocol.

Meanwhile, the program communication protocol can be high-level network layer protocol, such as TCP, UDP, HTTP of OSI 7 Layer and the like.

Meanwhile, the network control protocol can be high-level network layer protocol, such as the program communication protocol, or low-level layer protocol.

It will be apparent that, although the preferred embodiments have been shown and described above, the present disclosure is not limited to the above-described specific embodiments, and various modifications and variations can be made by those skilled in the art without departing from the gist of the appended claims. Thus, it is intended that the modifications and variations should not be understood independently of the technical spirit or prospect of the present disclosure.

## Claims

1. A signal processing device comprising:
a network controller configured to control multipath routing for at least one of a plurality of zonal signal processing devices; and
a network switch configured to perform network switching,
wherein the network controller is configured to migrate a first service executed in a first zonal signal processing device among the plurality of zonal signal processing devices, and to execute a second service corresponding to the first service in a second zonal signal processing device.

2. The signal processing device of claim 1, wherein the network controller is configured to select at least one of the plurality of zonal signal processing devices, and to execute the second service in the selected second zonal signal processing device.

3. The signal processing device of claim 1, wherein in response to network usage of the first service increasing to maximum during a reference time period or more, the network controller is configured to determine to migrate the first service.

4. The signal processing device of claim 1, wherein the network controller is configured to select the second zonal signal processing device based on network availability, the number of network connections, or the number of network paths for migrating the first service.

5. The signal processing device of claim 1, wherein the network controller is configured to :
in response to a zonal signal processing device being added, recognize the added zonal signal processing device based on network usage of the added zonal signal processing device, and
in response to service migration being required, execute a service corresponding to the first service in the added zonal signal processing device.

6. The signal processing device of claim 1, wherein the network controller is configured to store an execution location of the second service, or to set or reset a networking path for the execution location of the second service.

7. The signal processing device of claim 1, wherein the network controller is configured to migrate a third service executed in the signal processing device, and to execute a fourth service corresponding to the third service in at least one of the plurality of zonal signal processing devices.

8. The signal processing device of claim 1, wherein the network controller is configured to :
make an inquiry about the service migration to at least one of the plurality of zonal signal processing devices,
in response to receiving a service migration request from the first zonal signal processing device, determine a migration location of a corresponding service and transmit a request for executing the service to the second zonal signal processing device corresponding to the determined location.

9. The signal processing device of claim 8, wherein the network controller is configured to transmit the request for executing the service to the zonal signal processing device corresponding to the determined location, and
wherein after execution of the service requested by the zonal signal processing device is started, the network controller is configured to transmit a request for terminating the service to the zonal signal processing device that has transmitted the service migration request.

10. The signal processing device of claim 8, wherein upon receiving execution information of the second service from the second zonal signal processing device, the network controller is configured to update the execution information of the second service in a service registry.

11. The signal processing device of claim 1, further comprising a processor including the network controller and the network switch,
wherein the processor is configured to execute at least one operating system on a hypervisor, and to execute a plurality of virtual machines on the operating system.

12. The signal processing device of claim 11, wherein the network controller is configured to migrate a fifth service executed on the operating system, and to execute a sixth service corresponding to the fifth service on a second operating system of one of the plurality of zonal signal processing devices.

13. The signal processing device of claim 11, wherein the network controller is configured to migrate a seventh service executed on the first operating system on the hypervisor, and to execute control an eighth service corresponding to the seventh service on the second operating system on the hypervisor.

14. The signal processing device of claim 11, wherein the network controller is configured to migrate a ninth service executed on a first virtual machine among the plurality of virtual machines, and to execute a tenth service corresponding to the ninth service on a second virtual machine among the plurality of virtual machines.

15. The signal processing device of claim 1, wherein the network controller is configured to rearrange a service on a container basis.

16. The signal processing device of claim 11, wherein the network controller is configured to rearrange the service between a first container and a second container, or between the first container and the virtual machine, or between the first container and the operating system on the hypervisor, or between the virtual machine and the operating system on the hypervisor.

17. A signal processing device comprising:
a network node manager configured to manage a network node for multipath routing; and
a network switch configured to perform network switching,
wherein the network node manager is configured to execute or terminate a corresponding service based on receiving a service execution request.

18. The signal processing device of claim 17, wherein upon executing the service, the network node manager is configured to transmit execution information of the service to outside.

19. The signal processing device of claim 17, wherein the network node manager is configured to execute:
a service migration handler configured to request migration and execution of the service;
a service watcher configured to check status of the service; and
a service recoverer configured to request reexecution processing of the service.

20. A vehicle communication device comprising the signal processing device of any one of claims 1 to 19.
